# EUROPEAN PATENT SPECIFICATION

(11) **EP 0 632 956 B1**
(45) Date of publication and mention of the grant of the patent: **28.10.1998**
(21) Application number: 94305048.4
(22) Date of filing: 08.07.1994
(51) Int. Cl.: A01K 87/00

(54) **Inner-line fishing rod**
Angelrute mit innerer Schnurführung
Canne à pêche à fil intérieur

(30) Priority: 09.07.1993 JP 169882/93; 09.07.1993 JP 169883/93; 01.11.1993 JP 273367/93; 04.11.1993 JP 275120/93; 20.10.1993 JP 262472/93
(43) Date of publication of application: 11.01.1995
(73) Proprietor: SHIMANO INC., Osaka (JP)
(72) Inventor: Tokuda, Isamu, Sakai-shi, Osaka (JP); Harada, Takafumi, Sakai-shi, Osaka (JP); Tsukihara, Takayuki, Sakai-shi, Osaka (JP)
(74) Representative: Murgatroyd, Susan Elizabeth

(56) References cited:
- DE-A- 2 841 388
- FR-A- 1 592 422
- GB-A- 1 420 416

## Description

The present invention relates to an inner-line fishing rod. A fishing rod having the features as set forth in the preamble portion of claim 1 is known for example from FR-A-1,592,422.

To describe briefly the features of this fishing rod, a line entrance opening is defined in an outer surface of a fore-butt rod member. At a rear end of a telescopic rod member to be protractibly and retractably accommodated within the fore-butt rod member, there is defined an opening for allowing introduction of a fishing line into an inner hollow space of the telescopic rod member. Further, adjacent the line entrance opening and inside the fore-butt rod member, there is formed a plate-like abutment element for receiving rear ends of respective telescopic rod members while restricting further insertion of the telescopic rod members. And, this abutment element defines, at a center position thereof, a line insertion opening which communicates with the opening of the telescopic rod member.

According to the above-described conventional construction, for inserting a fishing line into the fishing rod with its telescopic rod members retracted therein, first, a line inserting tool to which the fishing line is fixed is inserted from the line entrance opening. Then, the tool together with the line is further inserted through the line inserting opening of the abutment member into the inside of the telescopic rod members. However, since the line inserting opening of the plate-like abutment element is present between the line entrance opening and the opening of the telescopic rod member, the line inserting operation is troublesome and time consuming. Further, as the opening of the telescopic rod member can not be seen from the outside of the rod, this adds to the difficulty of the operation.

Moreover, according to the conventional construction, since the plate-like abutment element is formed integrally as a part of the rod member to be held within a butt rod member, the telescopic rod members i.e. a tiptop rod member and an intermediate rod member(s) can not be withdrawn from the butt end opening of the butt rod member. In order to allow this possibility of withdrawal of the tiptop rod member or the like, the plate-like abutment element, which is to provided adjacent the line entrance opening, needs to be provided in a detachable manner. However, such detachable construction adjacent the line entrance opening is too difficult to realize.

In view of the above, a primary object of the present invention is to provide an improved inner-line fishing rod which allows an easier line inserting operation without entailing any damages to the line inserting portions thereof.

Accordingly, the present invention consists of an inner-line fishing rod having the features as set forth in the characterising portion of claim 1.

With the above-described construction, the position maintaining portion for determining the retracted position of the telescopic rod member is provided forwardly of the inner opening. Thus, unlike the above-described conventional construction, the construction of the invention has eliminated the abutment element to be provided adjacent the opening. Then, by setting the telescopic rod member to its retracted position thereby to locate its inner opening into the vicinity of the line entrance opening, a fishing line may be readily inserted through the entrance opening of the fore-butt rod member into the inner opening.

Accordingly, a line inserting operation becomes easier and entire preparations for fishing may be completed within a shorter period of time. Further, even if the telescopic rod members are retracted with holding the fishing line therein, as the inner opening of the telescopic rod member is located in the vicinity of the line entrance opening of the fore-butt rod member, there occurs no turning or jamming of the fishing line in the vicinity of the inner opening of the telescopic rod member.

According to one embodiment of the present invention, the position maintaining portion comprises a contact element capable of coming into contact with the forward end of the fore-butt rod member when said telescopic rod member is retracted, said contact element being detachably attached to said telescopic rod member.

That is, as the contact element operable to determine the retracted state and position of the telescopic rod member is provided to be contactable with the forward end of the fore-butt rod member, this contact element is present in the vicinity of the opening into which the fishing line is to be inserted. Then, by setting the telescopic rod member to its retracted position thereby to locate its inner opening into the vicinity of the line entrance opening of the fore-butt rod member, a fishing line may be readily inserted through the entrance opening of the fore-butt rod member into the inner opening.

Accordingly, with this construction too, a line inserting operation becomes easier and entire preparations for fishing may be completed within a shorter period of time. Further, even if the telescopic rod members are retracted with holding the fishing line therein, as the inner opening of the telescopic rod member is located in the vicinity of the line entrance opening of the fore-butt rod member, there occurs no turning or jamming of the fishing line in the vicinity of the inner opening of the telescopic rod member.

In addition, since the contact element is detachable from the telescopic rod member, when this element is broken, this contact element alone may be replaced by a new one.

According to a further embodiment of the present invention, a tiptop rod member to be protractibly and retractably accommodated within said telescopic rod member defines an opening for allowing introduction of the fishing line into said tiptop rod member, a retaining mechanism being provided for retaining said tiptop rod member at a retracted state thereof in such a manner as to locate said opening of said tiptop rod member in the vicinity of said inner opening of said telescopic rod member.

With this construction, since the opening of the telescopic rod member and the opening of the tiptop rod member are disposed adjacent each other, with insertion of the fishing line into the opening of the telescopic rod member, the line may be inserted through the opening of the tiptop rod member as well. Further, since the tiptop rod member is retained in position relative to the telescopic rod member, no change will occur in the relative position between the tiptop rod member and the telescopic rod member in the course of the line inserting operation.

Accordingly, the fishing line may be inserted, at one time, through the opening of the telescopic rod member and through the opening of the tiptop rod member, so that the line inserting operation may be effected in an efficient manner. Further, this eliminates the trouble of holding the tiptop rod member with one hand so as to maintain the relative position between the tiptop rod member and the telescopic rod member while effecting the line inserting operation with the other hand.

According to a still further embodiment of the present invention, in the above-described construction in which the telescopic rod member includes the position maintaining portion which comes into contact with the fore-butt rod member when the telescopic rod member is retracted, thereby to determine the retracted position of the telescopic rod member where the line entrance opening and the inner opening are positioned adjacent to each other, said line entrance opening comprises an elongate slot having a longitudinal axis thereof aligned with an axis of the fishing rod.

With the above construction, the longitudinal axis of the elongate slot is aligned with the axis of the fishing rod. This further facilitates the line inserting operation.

Thus, through the rational configuration of the line entrance opening alone, the line inserting operation may be further facilitated. Further, the elongated configuration provides the further advantage of reducing the area of the opening and thus reducing the deterioration in the strength, in comparison with a circular opening having the same diameter corresponding to the longitudinal axis of the elongate slot.

According to a still further embodiment of the present invention, said position maintaining portion comprises a bulging portion which comes into contact with an inner peripheral surface of the fore-butt rod member when the telescopic rod member is retracted.

That is, when the telescopic rod member is retracted, the bulging portion comes into contact with the inner peripheral surface of the fore-butt rod member and fixed here. With this, the rear end inner opening of the telescopic rod member is located in the vicinity of the line entrance opening, so that the fishing line may be easily inserted. Further, since the position maintaining portion is provided as the bulging portion on the telescopic rod member. if the telescopic rod member is operated against the contact pressure between the bulging portion and the inner peripheral surface, the telescopic rod member may be retracted further toward the rear end of the fore-butt rod member and this telescopic rod member may be protracted forwardly of the fore-butt rod member.

Accordingly, the movement of the telescopic rod member from its retracted position may be effected simply by applying such operating force as described above. Hence, a fine adjustment of the retracted position of the telescopic rod member relative to the line entrance opening may be effected easily.

According to a still further embodiment of the present invention, said line entrance opening is defined in a rod member constituting an intermediate rod member, and said line entrance opening is placed at a position forwardly of an opening of a butt rod member having a reel seat when said intermediate rod member is accommodated within said butt rod member, said line entrance opening being placed at a position further forwardly of said position when said intermediate rod member is protracted relative to said butt rod member.

That is, the line entrance opening and the reel seat are provided respectively to the intermediate rod member and the butt rod member which are protractible and retractable relative to each other. Then, it is possible to vary the distance between the line entrance opening and the reel. With this, in a fishing situation, the distance between the line entrance opening and the reel may be extended by protracting the intermediate rod member relative to the butt rod member. On the other hand, in a transporting situation, the butt rod member and the intermediate rod member may be retracted to each other, thereby to reduce the length of the entire rod. Moreover, even in this contracted condition. the line entrance opening is located forwardly of the opening of the butt rod member, so that the fishing line returning from the intermediate rod member to the reel will not enter the butt rod member. This may avoid the problem of the conventional construction that the fishing line is flexed inside the butt rod member.

Therefore, by rendering the intermediate rod member protractible and retractable relative to the butt rod member rather than extending the length of the butt rod member, it becomes possible to extend the distance between the line entrance opening and the reel to allow introduction or withdrawal of the fishing line with less frictional resistance and also to reduce the distance between the line entrance opening and the reel to allow compact handling of the fishing rod. Such effect could not be achieved by the conventional construction.

Moreover, even if the rod members are retracted with the reel being kept attached to the butt rod member, this operation does not damage the fishing line and the fishing rod may be stored without detaching the fishing gears such as a hook, a sinker or the like from the rod.

According to a still further embodiment of the present invention, a fore-butt rod member having a smaller diameter than a butt rod member is protractibly and retractably accommodated in the butt rod member including a reel seat, and said line entrance opening is defined in an outer face of said fore-butt rod member.

Further, position maintaining means is provided for placing said line entrance opening inside said butt rod member when said fore-butt rod member is retracted into said butt rod member and also for placing said line entrance opening forwardly and outwardly of a forward end of said butt rod member when said fore-butt rod member is protracted from said butt rod member.

With the above-described construction, in the retracted state, the line entrance opening is located inside the butt rod member, so that this line entrance opening may be covered by the butt rod member. Also, this construction may reduce the entire length of the rod when retracted.

Accordingly, the butt rod member functions also as a cover for covering the line entrance opening and further the entire rod length under the retracted condition may be reduced for convenience in a transportation or store display of this fishing rod.

A still further embodiment will be described next.

The position maintaining means is adapted to selectively provide;
a protracted state in which said fore-butt rod member is protracted from said butt rod member so as to place said line entrance opening forwardly distant from the forward end of said butt rod member,
a first retracted state realized by a first-step retracting operation from said protracted state in which said fore-butt rod member is retracted into said butt rod member so as to fixedly position said line entrance opening forwardly of the forward end of said butt rod member and in the vicinity of the same, and
a second retracted state realized by a second-step retracting operation in which said fore-butt rod member is further retracted into said butt rod member so as to place said line entrance opening inside said butt rod member.

That is to say, in the second retracted state, the line entrance opening is located inside the butt rod member to be covered by this butt rod member, and also the entire length of the fishing rod as set to the retracted condition may be reduced.

On the other hand, in a fishing situation, the line entrance opening is brought to a position forwardly and outwardly of the forward end of the butt rod member. Then, for effecting a fishing in this condition, the fore-butt rod member is withdrawn to its protracted position to obtain a good distance between the line entrance opening and the reel, thereby to restrict the flexion angle of the fishing line at the line entrance opening for obtaining reduced friction of the line to be fed. Then, for changing the site of fishing, with the line being maintained inside the fore-butt rod member, the fore-butt rod member is brought to the first retracted state so as to place the line entrance opening at a position forwardly and in the vicinity of the forward end of the butt rod member. Therefore, the fishing rod may be conveniently transported under the length-reduced condition.

Accordingly, in e.g. displaying the rod at a retail shop, the butt rod member acts also as a cover for covering the line entrance opening, and also the entire length of the rod may be reduced for minimizing the space needed for displaying. Further, when the line entrance opening is exposed, there is the advantage that the protracting state of the fore-butt rod member may be switched over depending on the occasion, e.g. between a fishing activity and transportation of the rod.

According to a still further embodiment of the invention, a fishing rod may be constructed as follows.

That is, the position maintaining means for maintaining the fore-butt rod member at the first retracted state includes an outer engagement member formed of a material softer than material forming a rod stock and outwardly engaging the portion of the fore-butt rod member forming the line entrance opening and an inner face of the opening of the butt rod member to be fitted on the outer engagement member.

With the above, when the fore-butt rod member is set to the first retracted state, the inner face of the opening of the butt rod member outwardly engages the outer engagement member to fix this state. In this condition, as the inner face of the opening is placed in firm contact with the outer engagement member, the above state may be fixed in a stable manner.

Thus, by using the soft outer engagement member as the mating surface means in the fixed state, there is no need for enhancing the manufacturing precision of the product such as the engagement tolerance. Moreover, since this outer engagement member is outwardly engaged with the line entrance opening, this construction provides a further effect of reinforcing the portion forming the line entrance opening.

According to a still further embodiment of the present invention, a fishing rod may be constructed as described next.

That is, to the portion of the fore-butt rod member forming the line entrance opening, there is detachably attached a line inserting tool projecting from an outer peripheral face of the fore-butt rod member. And, the line inserting tool includes an outwardly-oriented inclined face extending normal to the axis of the fore-butt rod member. The inclined face defines a line inlet opening which acts as an inclined guide passage communicating with the line entrance opening.

With the above construction, the fishing line from the reel is inserted through the line inlet opening by using the inserting tool and is advanced into the inclined guide passage. This fishing line together with the tool reaches, through the line entrance opening, the inner space of the fore-butt rod member. As described, since the line inlet opening for introducing the fishing line is formed as an outwardly oriented inclined face, it is easy for a user to visually confirm the line inlet opening and to effect the line inserting operation.

Further, as the line inserting tool having the above construction is rendered detachable, for placing the line entrance opening inside the butt rod member, the line inserting tool will be detached and the fore-butt rod member is retracted into the butt rod member, thereby to realize the second retracted state.

Thus, as the line inserting tool for allowing speedy line inserting operation is rendered detachable, this construction adds to the advantage of the inner-line fishing rod which may be switched over between the first retracted state and the second retracted state.

According to a still further embodiment of the invention, a fishing rod may be constructed as follows.

That is, a fore-butt rod member having a smaller diameter than the butt rod member is protractibly and retractably accommodated in the butt rod member including a reel seat, and said line
entrance opening is defined in an outer face of said fore-butt rod member, at a rear end of a telescopic rod member to be protractibly and retractably accommodated within the fore-butt rod member, a rear end opening being defined for allowing introduction of the fishing line into the telescopic rod member, a protracted state of the telescopic rod member being maintained by engagement between the rear end of the telescopic rod member and an inner face of a top portion of the fore-butt rod member.

Further, a position maintaining portion is adapted to selectively provide;
a protracted state in which said fore-butt rod member is protracted from said butt rod member so as to place said line entrance opening forwardly distant from the forward end of said butt rod member,
a first retracted state realized by a first-step retracting operation from said protracted state in which said fore-butt rod member is retracted into said butt rod member so as to fixedly position said line entrance opening forwardly of the forward end of said butt rod member and in the vicinity of the same, and
a second retracted state realized by a second-step retracting operation in which said fore-butt rod member is further retracted into said butt rod member so as to place said line entrance opening inside said butt rod member.

With the above construction, the rear end opening of the telescopic rod member into which the fishing line from the reel needs to be inserted after the fore-butt rod member may be positioned in the vicinity of the line entrance opening at the first retracted state. So that, the rear end opening of the telescopic rod member may be visually confirmed through the line entrance opening and the fishing line which has been inserted through the line entrance opening may be then inserted into the rear end opening as well.

Accordingly, this construction too facilitates the line inserting operation.

According to a still further embodiment of the present invention, a fishing rod may be constructed as follows.

That is, a guide ring formed of hard material is fitted to an opening edge of a line intake opening of the fore-butt rod member, and a portion of the line entrance opening to which the guide ring is fitted is formed of material softer than material forming the remaining portion of the fore-butt rod member.

Hence, even if flexion is developed in the fore-butt rod member, this deforming force from the fore-butt rod member may be effectively absorbed through deformation of the soft material, thereby to reduce the deforming force to be applied to the guide ring. Further, as the guide ring is separated from the remaining portion of the fore-butt rod member, such force from the fore-butt rod member will hardly affect the guide ring in a direct manner.

Therefore, when the rod is flexed, any damage or detachment of the guide ring resulting from the flexion may be effectively restricted. Further, when the fishing rod is accidentally dropped, the soft material portion may absorb the shock to prevent the guide ring from e.g. breaking. Moreover, this construction may minimize secular change in the attachment condition between the soft portion and the guide ring and inadvertent detachment of the guide ring from the soft portion may be restricted.

According to a still further embodiment of the invention, the fore-butt rod member defines the line entrance opening for introducing a fishing line into an inner passage of the fore-butt rod member, an attachment cylinder member formed of material softer than material forming the fore-butt rod member is firmly attached to an outer peripheral face of the fore-butt rod member, and a guide ring formed of material harder than the material forming the fore-butt rod member is fitted to an opening edge of an line inlet opening communicating with the line entrance opening.

With the above construction, a cylinder member is employed as the member provided in correspondence to the line entrance opening of the fore-butt rod member for the purpose of attaching the guide ring to the line inlet opening. And, this cylinder member as an attachment cylinder member is firmly attached to the fore-butt rod member. The attachment cylinder member defines the line inlet opening communicating with the line entrance opening to which the guide ring is fitted. Therefore, this construction may achieve the same effects as those described in connection with the first-described construction of the present invention. In addition, in the case of this construction, as the attachment cylinder member is formed cylindrical and firmly attached to the fore-butt rod member, this member serves to reinforce the fore-butt rod member which strength is deteriorated by the formation of the line entrance opening.

Thus, this construction using the cylindrical attaching member to be firmly attached to the fore-butt rod member achieves the effect of protection for the guide ring as well as the further effect of reinforcement of the fore-butt rod member.

According to a still further embodiment of the present invention, a fore-butt rod member is protractibly and retractably accommodated in a butt rod member including a reel seat, and a position maintaining means is provided for selectively providing a protracted state in which the fore-butt rod member is withdrawn from the butt rod member so as to place the line entrance opening forwardly distant from the forward end of the butt rod member and a retracted state in which the fore-butt rod member is retracted from the protracted state so as to place the line entrance opening forwardly of the forward end of the butt rod member in the vicinity of the same.

With the above, the fore-butt rod member is switchable between the two states of the protracted state and the retracted state. In the protracted state, a significant distance is reserved between the reel seat and the line entrance opening so as to restrict the degree of flexion of the fishing line at the line entrance opening into the inner passage, thereby to allow smooth feeding of the fishing line. On the other hand, when the angler moves to a different fishing site with the fishing line kept inside the fishing rod, the rod may be made compact by being set to the retracted state.

In the above-described switchable construction, in the retracted state, the forward end of the butt rod member is fixedly engaged on the attaching cylinder member.

Thus, the outer cylinder member may be used also as the position maintaining means. Also, since this outer cylinder member is formed of material softer than the material forming the fore-butt rod member, this engagement is stronger than that with the butt rod member, so that the retracted state may be maintained reliably.

Further and other objects, features and effects will become more apparent from the following more detailed description of the embodiments of the invention with reference to the accompanying drawings.

The invention will now be described by way of example with reference to the accompanying drawings in which:-
Fig. 1 is a side view in vertical section showing major portions of a telescopic type inner-line fishing rod when a butt rod member, a tiptop rod member, a rod member and a telescopic rod member are retracted to each other,
Fig. 2(a) is a side view showing a condition in which the butt rod member, the tiptop rod member, the rod member and the telescopic rod member are retracted to each other,
Fig. 2(b) is a side view showing a condition in which the butt rod member, the tiptop rod member, the rod member and the telescopic rod member are protracted relative to each other,

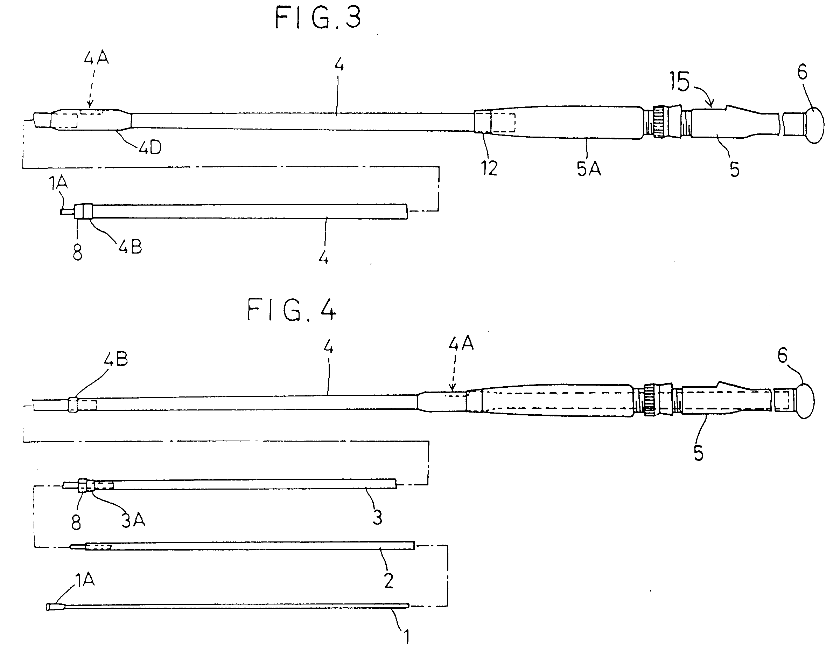

Fig. 3 is s side view showing a condition in which the butt rod member is protracted while the tiptop rod member, the rod member and the telescopic rod member are retracted to each other,
Fig. 4 is a side view showing a condition in which the butt rod member is retracted while the tiptop rod member, the rod member and the telescopic rod member are protracted,
Fig. 5 is a plane view showing a line entrance opening,
Fig. 6 is a front view in vertical section showing an outer-engagement fixing portion of a retainer member for the tiptop rod member,
Fig. 7 is a perspective view showing a capped condition with the components including the tiptop rod member are retracted,
Fig. 8 is a side view in vertical section showing a further embodiment corresponding to Fig. 1,
Fig. 9 is an overall side view of the fishing rod of Fig. 8,
Fig. 10 is a side view in vertical section showing a further construction of a contact member,
Fig. 11 is a side view in vertical section showing a further construction of the contact member,
Fig. 12 is a side view in vertical section showing a further construction of a position maintaining portion of the telescopic rod member,
Fig. 13 is a side view in vertical section showing a condition of the construction of Fig. 12 in which the telescopic rod member is protracted,
Fig. 14(a) is a side view showing a construction in which a line entrance opening is formed in the telescopic rod member and in a condition in which the fore-butt rod member, the telescopic rod member and the like are retracted,
Fig. 14(b) is a side view showing a condition in which the components including the fore-butt rod member are protracted from the condition of Fig. 14(a),
Fig. 15 shows a further embodiment of the invention, in which;
Fig. 15(a) is a side view showing a condition in which the butt rod member, the tiptop rod member, the rod member and the telescopic rod member are retracted to a second retracted state,
Fig. 15(b) is a side view showing a condition in which the butt rod member, the tiptop rod member, the rod member and the telescopic rod member are retracted to a first retracted state, and
Fig. 15(c) is a side view showing a condition in which the butt rod member, the rod member and the telescopic rod member are protracted,
Fig. 16 is a side view in vertical section showing major portions of a telescopic type inner-line fishing rod with a butt rod member, a tiptop rod member, a rod member and a telescopic rod member are retracted,

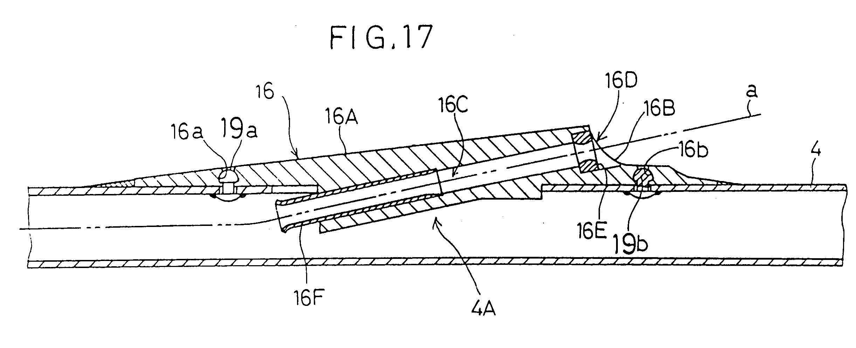

Fig. 17 is a side view in vertical section showing a line inserting tool,
Figs. 18(a) and (b) are side views of a further embodiment in which an intermediate rod member of the construction in Fig 15 is constructed as a separate type rod member,
Figs. 19(a), (b), (c) show a still further embodiment and are side views of a rod construction which allows accommodation of the rod members including the fore-butt rod member, the tip rod member and the other rod members within the butt rod member,
Figs. 20(a), (b), (c) show a still further embodiment and are side views in vertical section of a construction in which the position maintaining means is formed inside the butt rod member.
Fig. 21 shows a still further embodiment and comprises a side view in vertical section showing a condition where a rear end opening of a tiptop rod member is placed adjacent a line entrance opening to allow the rear end opening of the tiptop rod member to project,
Fig. 22 shows a still further embodiment and comprises a side view in vertical section showing a condition in which a rear end opening of an intermediate rod member is disposed with an inclination,
Fig. 23 shows a still further embodiment and comprises a side view of a further construction of a grip portion and a rubber ring member,
Fig. 24 shows a still further embodiment and comprises a side view of a still further construction of a grip portion and a rubber ring member,
Fig. 25 is a front view in vertical section showing a construction in which the rubber ring member includes a spline-like inner peripheral face,
Fig. 26 is a perspective view showing a further embodiment of a cap,
Fig. 27 is a perspective view showing a still further embodiment of a cap,
Fig. 28 is a side view in vertical section showing a further embodiment of a butt end,
Fig. 29 is a side view in vertical section of a still further embodiment employing, as a butt end cap, a combination of a soft rubber and a hard rubber,
Fig. 30 is a plane view of a still further embodiment showing a condition in which a guide ring is split into halves, and
Fig. 31 is a plane view showing a further embodiment of an attaching member.

Preferred embodiments of an inner-line fishing rod relating to the present invention will be described in details with reference to the accompanying drawings.

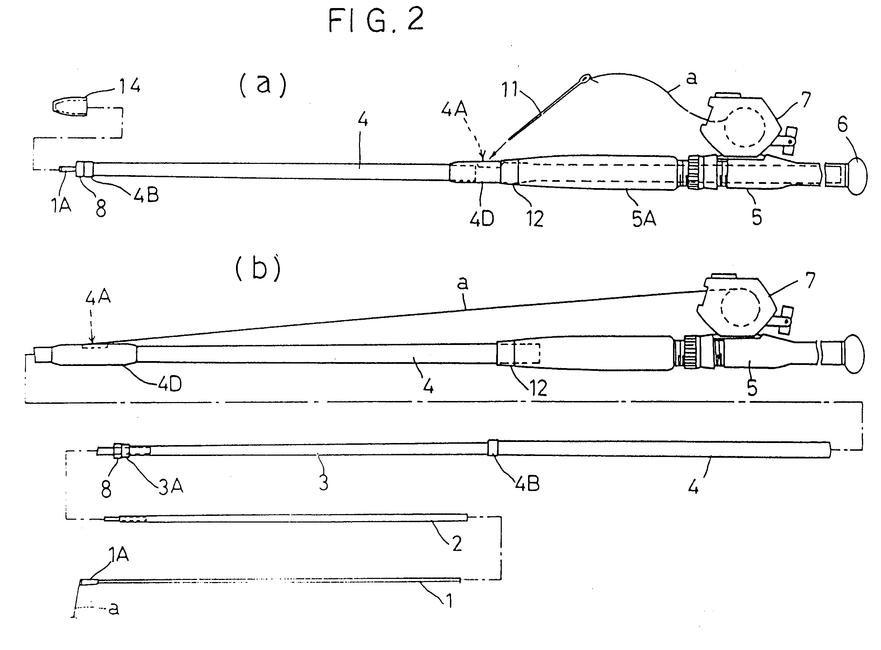

An inner-line fishing rod of a first embodiment, as shown in Figs. 2(a), (b), includes a tiptop rod member 1, a rod member 2, a telescopic rod member 3, a fore-butt rod member 4 as a butt-side rod member to which the mentioned rod members are telescopically attached, and a butt rod member 5 protractible and retractable relative to the fore-butt rod member 4. Thus, this fishing rod is constructed as a telescopic fishing rod. A butt end 6 is attached to a rear end of the butt rod member 5, and a reel 7 is attached to an intermediate position on the butt rod member. Then, a fishing line (a) fed from the reel 7 is inserted through an elongated circular line entrance opening 4A defined in an outer face of the fore-butt rod member 4 to be inserted through the tiptop rod member 1.

The tiptop rod member 1, the rod member 2 and the telescopic rod member 3 are telescopically protractible and retractable relative to the fore-butt rod member 4. During a transportation, as shown in Fig. 2(a), the fishing rod may be reduced in length. On the other hand, during a fishing activity, as shown in Fig. 2(b), the rod members including the tiptop rod member 1 may be protracted; and also the butt rod member 5 may be extended rearwardly to provide an increased distance between the reel 7 and the line entrance opening 4A, thereby to reduce the frictional resistance during the introduction of the fishing line into the fishing rod.

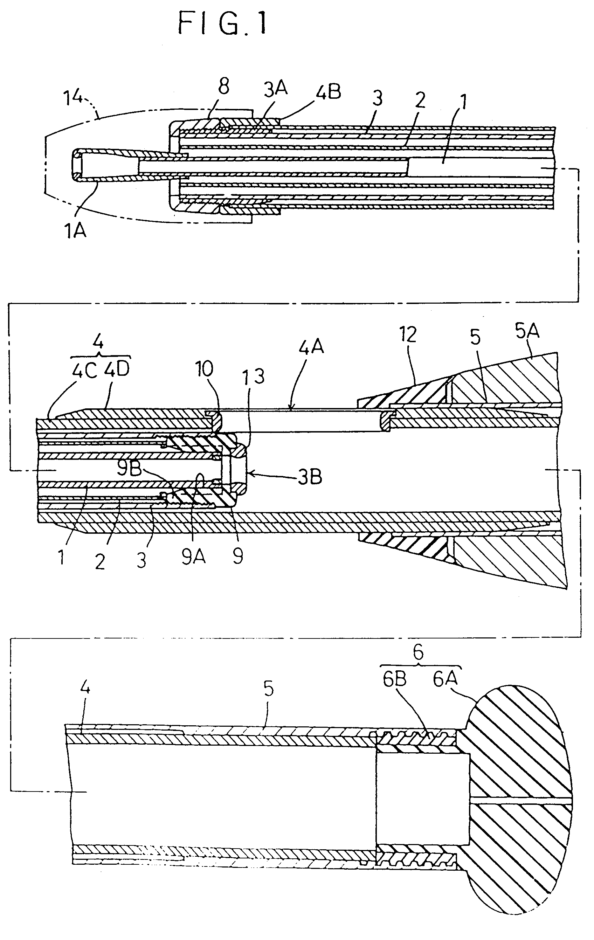

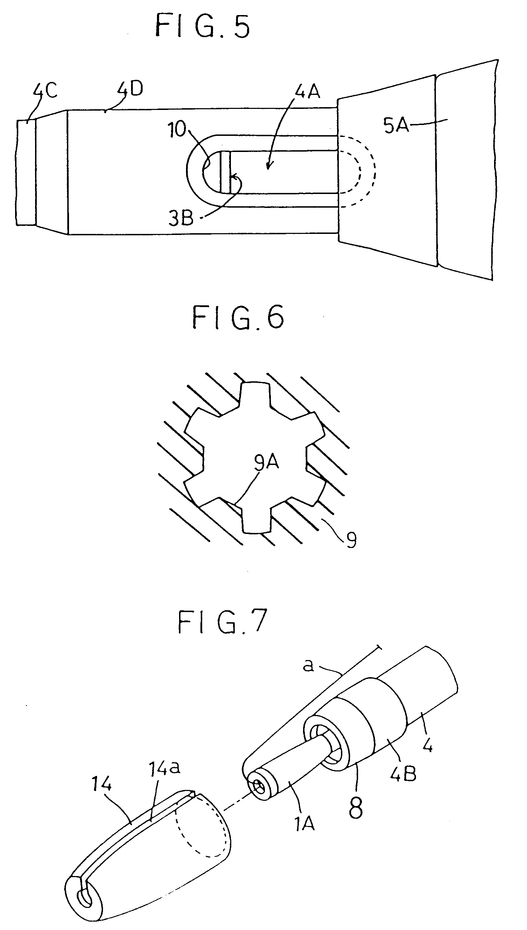

A tiptop portion 1A formed of metal, as shown in Fig. 1, is provided at the leading end of the tiptop rod member 1, with the portion 1A having a slightly increased diameter. When the tiptop rod member 1 is stored within the fore-butt rod member 4, this tiptop portion 4A alone projects, thereby to facilitate the protracting operation of the tiptop rod member 1. As shown in Fig. 1, a head 4B is capped on the leading end of the fore-butt rod member 4 and a contact member 8 acting as a position maintaining portion is threaded therein. With this, when the telescopic rod member 3 is retracted, the contact member 8 comes into contact with the head 4B, thereby to determine the limit of retraction of the telescopic rod member 3. A screw member 3A to which the contact member 8 is threaded is fitted on the forward end of the telescopic rod member 3. Further, a rear end of this screw member 3A is inwardly engaged with an inner peripheral face of the fore-butt rod member 4, thereby to fix the telescopic rod member 3 at the retracted state. As shown in Figs. 1 and 6, at a rear end of the telescopic rod member 3, a rubber retainer member 9 as a retainer mechanism is fixedly threaded therein. This retainer member 9 defines, in its inner peripheral face, a rugged face 9A, and at a forward end of this rugged face 9A, there is defined a tapered inclined face acting as a guide mechanism for guiding the rear end of the tiptop rod member 1. Then, the rear end of the tiptop rod member 1 past the tapered inclined face is to be retained by the rugged face 9A. The retainer member 9 defines, at the rear end thereof, an opening for introducing the fishing line (a), and a ceramic guide ring 13 is fitted to this opening. Also, the forward end face of the retainer member 9 is adapted to come into contact with the rear end of the rod member 3, thereby to constitute a restricting portion 9b for restricting the limit of retraction of the rod member 3 at its retracted state.

On the other hand, as to the fore-butt rod member 4, an outer engagement member 4D made of a resin is firmly attached on an outer periphery of a rod stock 4C, and an opening is defined at an intermediate portion of the outer engagement member 4D thereby to form the line entrance opening 4A for the fishing line (a). A guide ring 10 formed of stainless steel or ceramic is fitted to the inner edge of this line entrance opening 4A. Then, the rear end of the telescopic rod member 3 set at the limit of retraction by the contact member 8 extends into the area of the opening of the line entrance opening 4A. That is to say, as shown in 5, the line inlet opening 3B formed at the rear end of the telescopic rod member 3 may be seen from the outside through the line entrance opening 4A. Accordingly, when a line inserting tool 11 to which the fishing line (a) is fixed is to be inserted into the telescopic rod member 3, this line inserting operation may be facilitated by the visual confirmation of the opening 3B.

As shown in Fig. 1, a large-diameter grip portion 5A is formed at the forward end of the butt rod member 5. And, a rubber ring member 12 is fitted to the leading end of the grip portion 5A. Then, when the butt rod member 5 is relatively moved in the forward direction to be fixedly engaged on the outer engagement member 4D of the fore-butt rod member 4, the rubber ring member 12 comes into firm contact with the outer engagement member 4D thereby to maintain the engaged condition of the butt rod member 5 without looseness. As shown in Fig. 2(b), when the butt rod member 5 is withdrawn rearwardly relative to the fore-butt rod member 4, the rubber ring member 12 comes into firm outer engagement with the rod stock 4C of the fore-butt rod member 4, thereby to maintain this engaged condition.

As shown in Fig. 7, the contact member 8 is to be covered with a cap 14 for covering the tiptop rod member 1, the rod member 2 and the telescopic rod member 3 at the retracted states thereof. And, this cover 14 includes a slit 14a for allowing extraction of the fishing line (a).

As shown in Fig. 1, the butt end 6 attached to the rear end of the butt rod member 5 includes a body 6A made of a hard rubber. As this butt end 6 is to be thread-fixed to the rear end of the butt rod member 5, a portion 6B forming this threading is formed of a harder rubber than the rubber forming the body 6A.

With this fishing rod, the rod members are retracted with the line, the sinker or the like are attached thereto. Then, it may be conceivable to provide, inside the reel, a mechanism for automatically retrieving the fishing line in association with the retraction of the rod members. In this case, a clutch mechanism should be provided also for allowing said retrieving mechanism to operate only when the rod members are retracted. Further, this type of inner-line rod allows the angler to easily feel a fish bite, depending on the type of fishing.

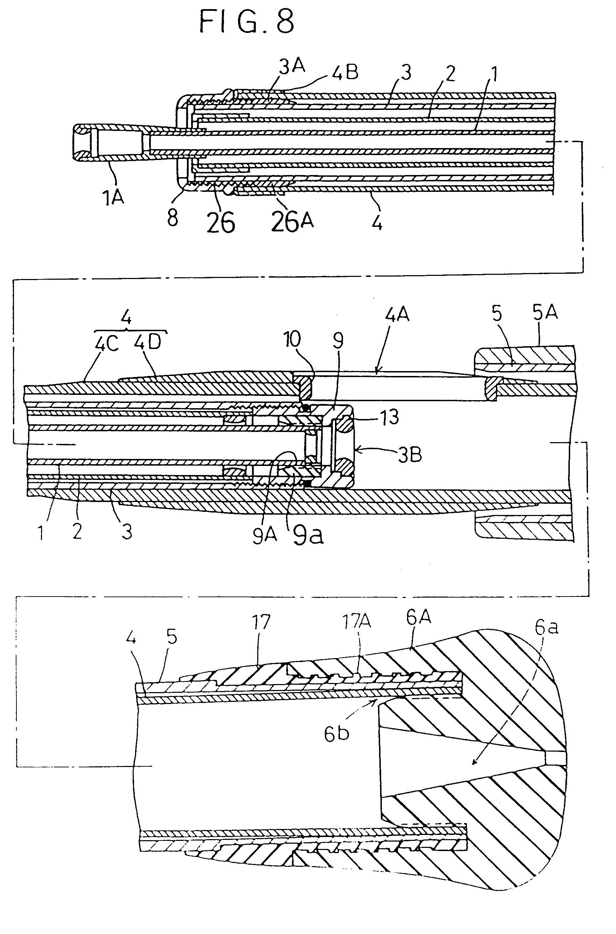

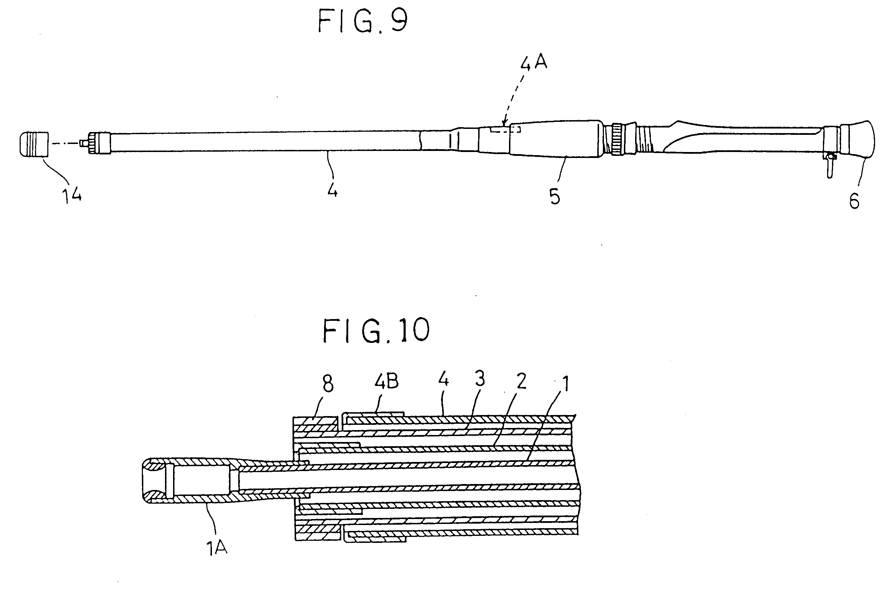

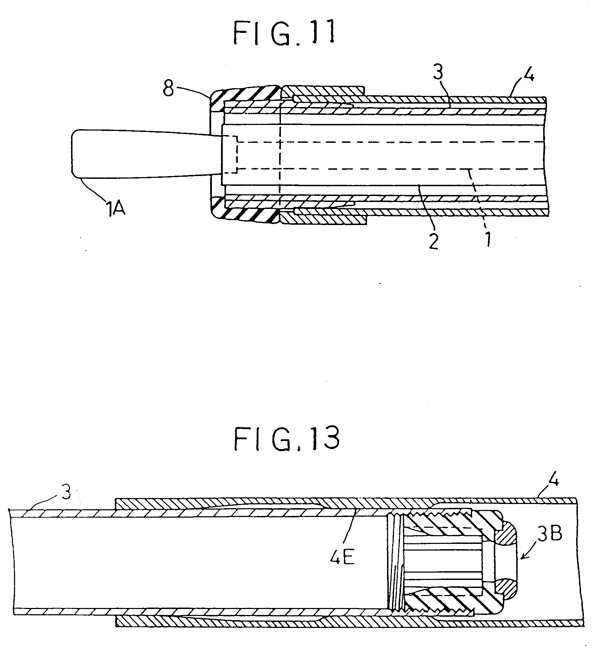

A further embodiment of the invention will be described next.
(1) In the following, those portions of this further embodiment different from the foregoing embodiment will be mainly described.
   As shown in Figs. 8 and 9, to describe first the leading end of the fore-butt rod member 4, a head 4B is fitted on this leading end of the fore-butt rod member 4. At an intermediate portion of the fore-butt rod member 4, there is formed a line entrance opening 4A. The plate thickness of the fore-butt rod portion 4 forming the line entrance opening is thicker than that of the leading end portion. Further, an outer engagement member 4D is fitted thereon for reinforcement.
   As shown in Fig. 8, a cap 26 is fitted on the leading end of the telescopic rod member 3 positioned inside the fore-butt rod member 4, and a bulging portion 26A is formed on the outer face of this cap 26, thereby to form an engagement fixing portion to be engaged with the inner face of the end opening of the fore-butt rod member 4, and a contact member 8 is threaded to the outer face of the cap 26.
   On the other hand, a retainer member 9 made of resin is threaded into the rear end of the telescopic rod member 3. This retainer member 9 defines, at an axial position thereof, an opening 3B for allowing insertion of the fishing line. And, a line guide ring 13 is fitted to the opening 3B.
   With the above construction, as the telescopic rod member 3 is inserted into the fore-butt rod member 4 from the rear end thereof and the contact member 8 is fixed to the cap 26: then, this contact member 8 comes into contact with the leading end of the fore-butt rod member 4. And, in this contacted condition, the line inlet opening 3B of the retainer member 9 is positioned adjacent the line entrance opening 4A.
   As shown in Fig. 8, a rubber engaging ring 9a is fitted inside the retainer member 9, so that an inner rugged face 9A of this engaging ring 9a may engage and retain the rear end of the tiptop rod member 1. Further, a contact between the forward face of the retainer portion 9 and the rear end of the rod member 2 constitutes a restricting portion for this rod member 2.
   At a forward end of the butt rod member 5, there is formed a grip portion 5A. However, no rubber ring member 12 is attached here. Thus, since this construction can not utilize the retaining force of the rubber ring member 12, the construction employs a following arrangement for retaining the fore-butt rod member 4 by the butt end 6.
   As shown in Fig. 8, a through hole 6a is formed at an axial position of the butt end 6 inside a rubber body 6A thereof. And, outside the diameter of this through hole 6a, there is defined an annular recess 6b opened in the forward direction. The annular recess 6b includes, in its small-diameter outer peripheral face, a spline-like rugged face, on which the rear end of the fore-butt rod member 4 is fitted, whereby the fore-butt rod member 4 may be fixed at its retracted state. At the rear end of the butt rod member 5, there is fixed a butt ring 17 made of hard resin. And, this butt ring 17 includes an outer screw type trapezoidal threaded portion 17A. Then, the annular recess 6b of the rubber body 6A is fitted on the butt ring 17, thereby to attach the rubber body 6A. No threaded portion needs to be formed in the large diameter inner peripheral face of the annular recess 6b to be fitted in the threaded portion 17A of the butt ring 17. For attaching the rubber body 6A to the butt ring 17, this attachment may be effected simply by forcibly pressing of the rubber body 6A. However, it is also conceivable to form, in the large diameter inner peripheral face of the annular recess 6b, a threaded portion threadable with the trapezoidal threaded portion of the butt ring 17.
(2) A further construction of the contact member 8 will be described next.
   (a) As shown in Fig. 10, a contact member 8 to be provided at the leading end of the telescopic rod member 3 is shaped like a ring to be detachably attached to the leading end of the telescopic rod member 3. Then, as the telescopic rod member 3 is inserted from the rear end of the fore-butt rod member 4, the contact member 8 is fixedly attached to the leading end of the telescopic rod member 3. For withdrawing the telescopic rod member 3 from the rear end of the fore-butt rod member 4 for e.g. water-washing the telescopic rod member 3, the contact member 8 is to be detached from the telescopic rod member 3.
   (b) As shown in Fig. 11, a contact member 8 is formed of a hard material such as hard rubber. And, this rubber contact member 8 is designed to be detachably attached to the leading end of the telescopic rod member 3. The contact member 8 is to be engaged with pressure with the leading end of the telescopic rod member 3 by the elasticity of the rubber material or the like. With this arrangement, the threaded type attachment/detachment construction is not needed.

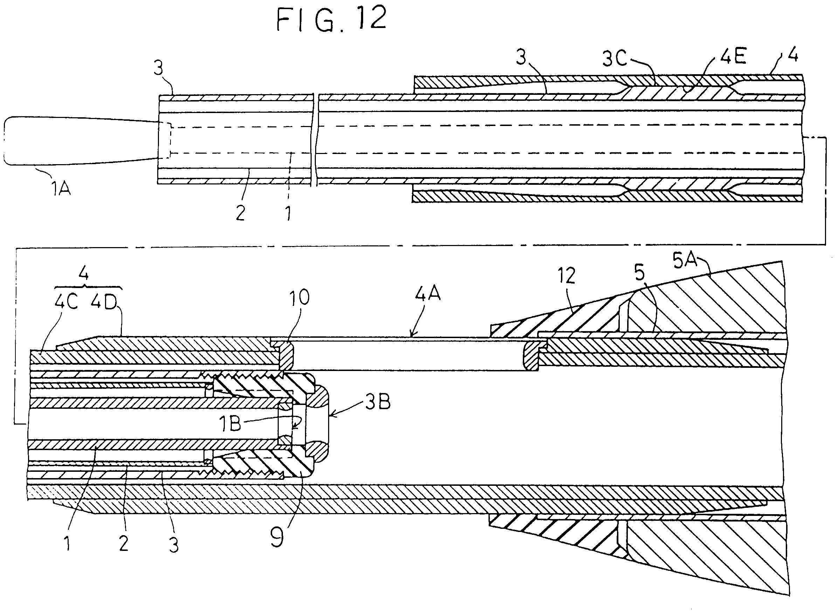

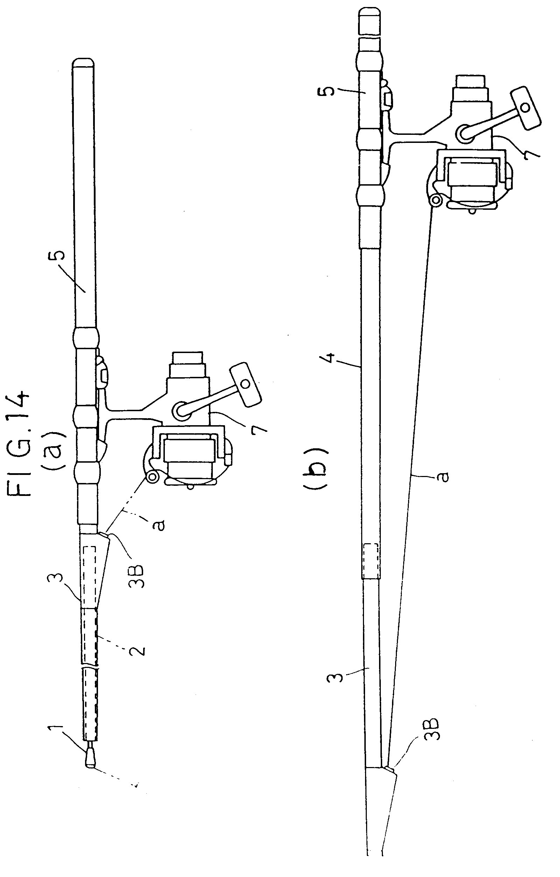

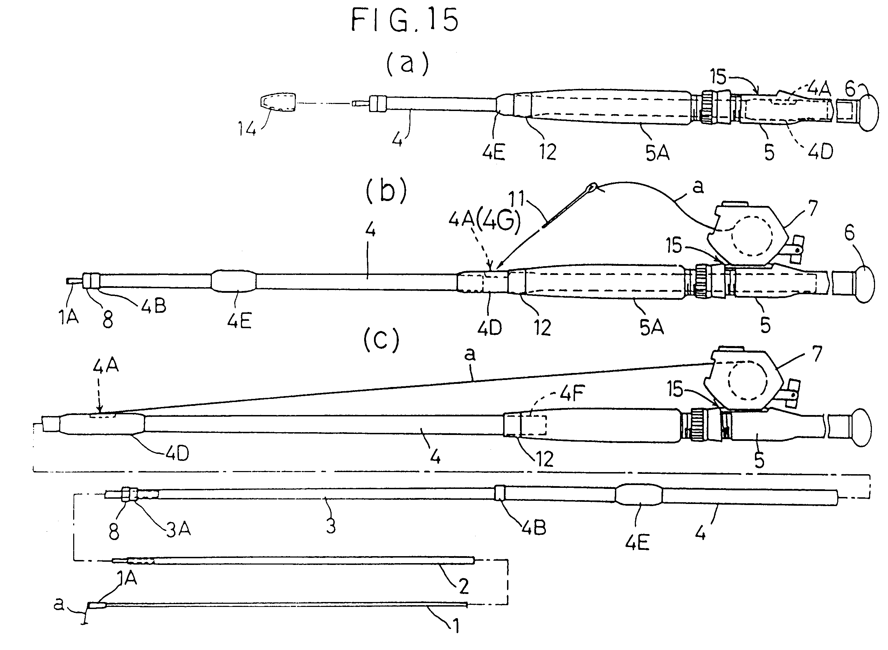

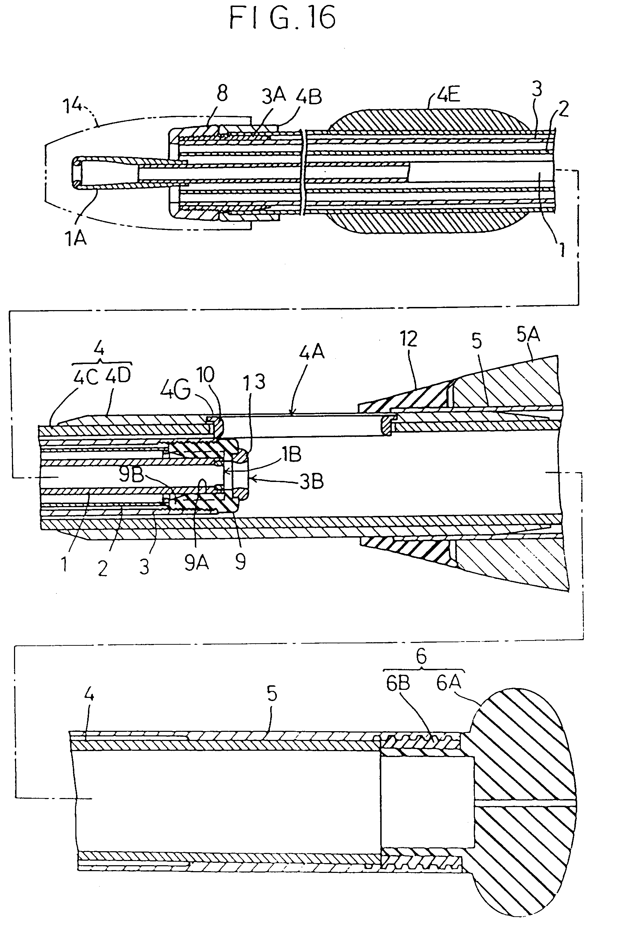

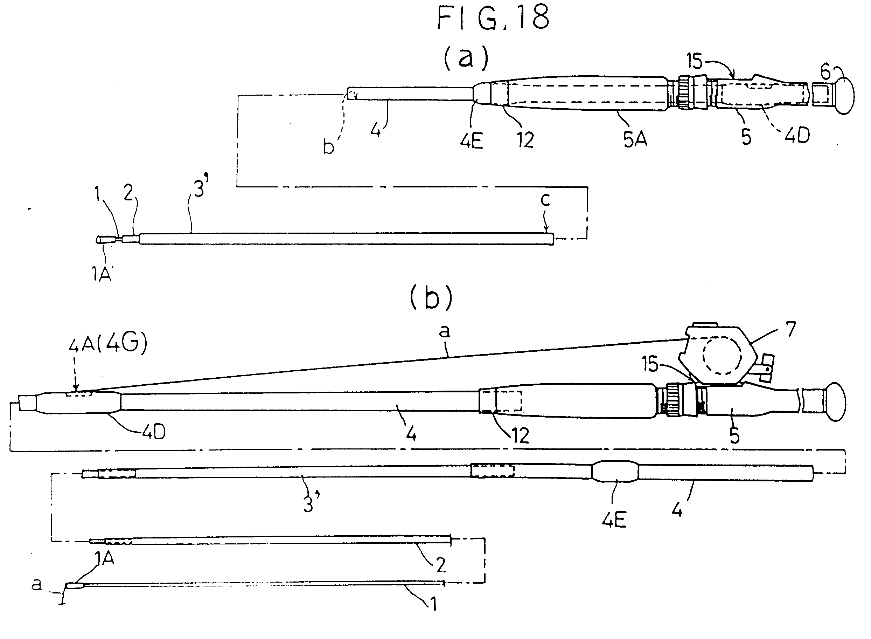

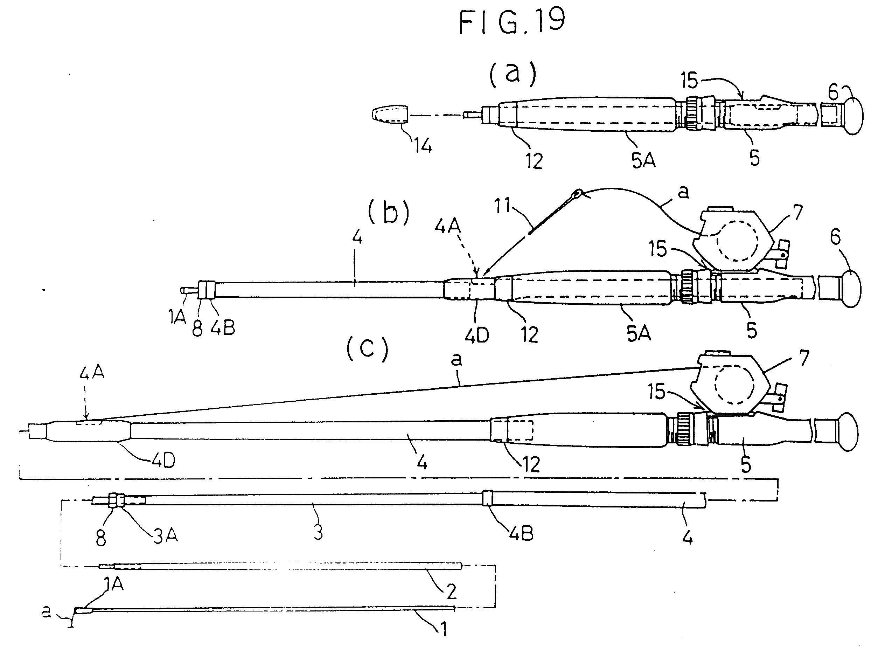

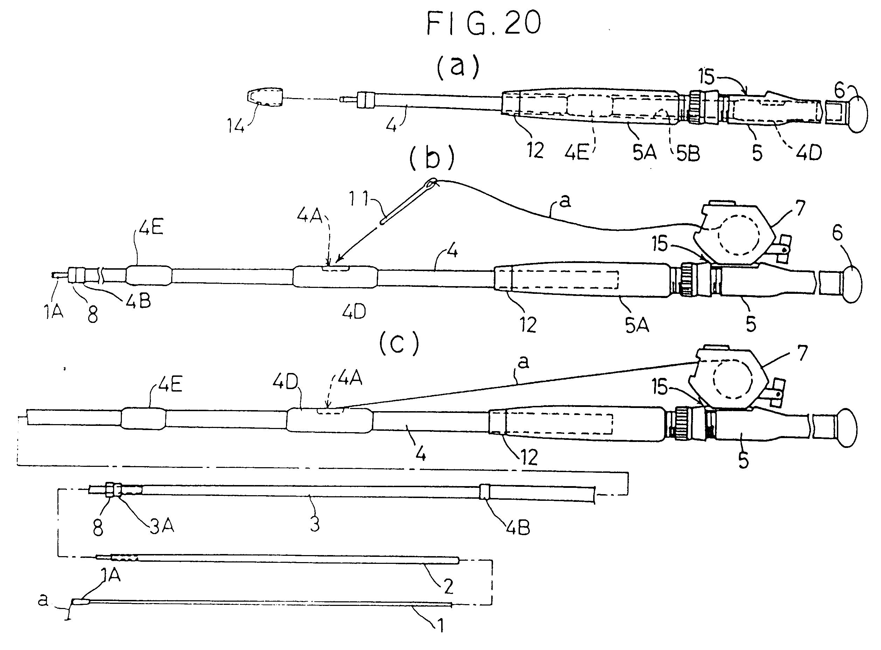

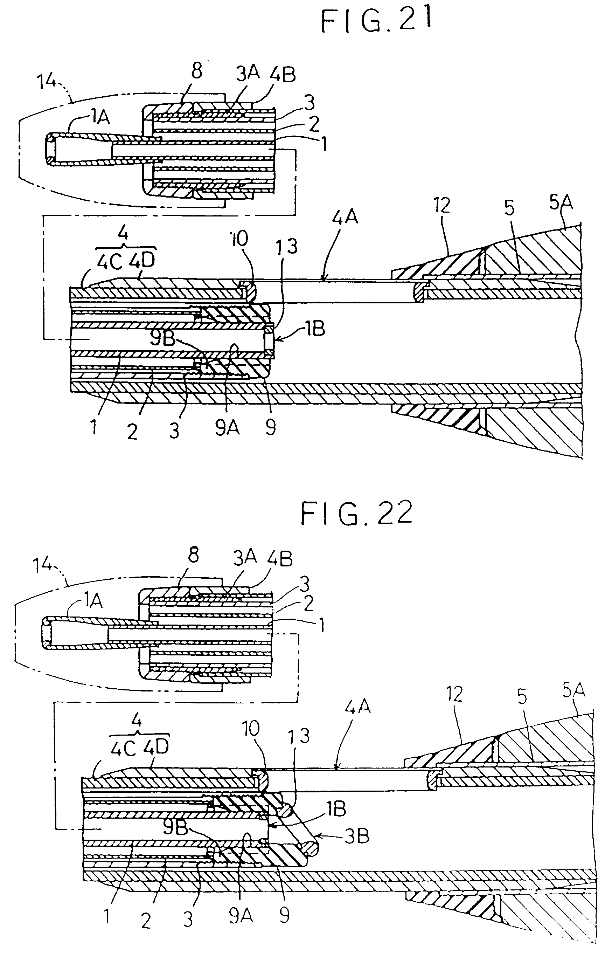

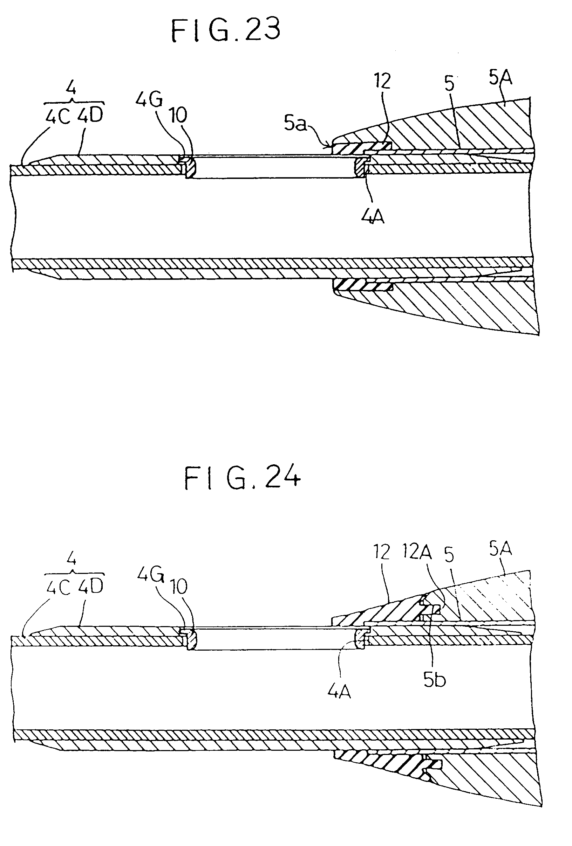

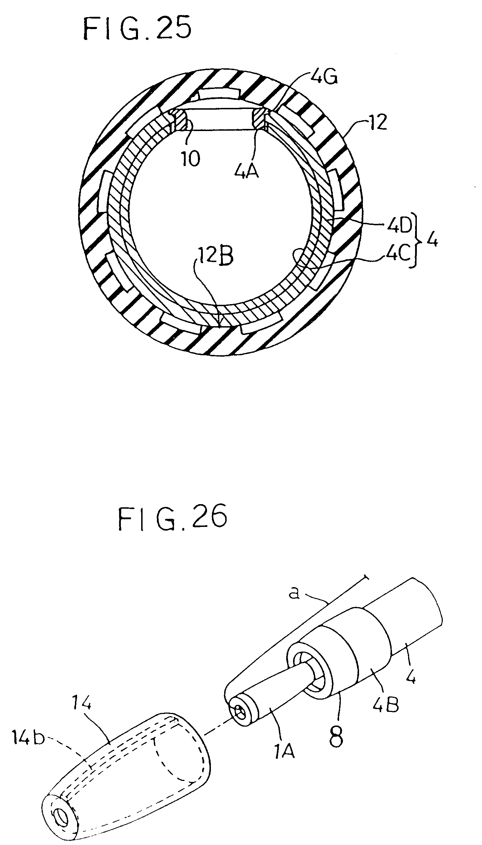

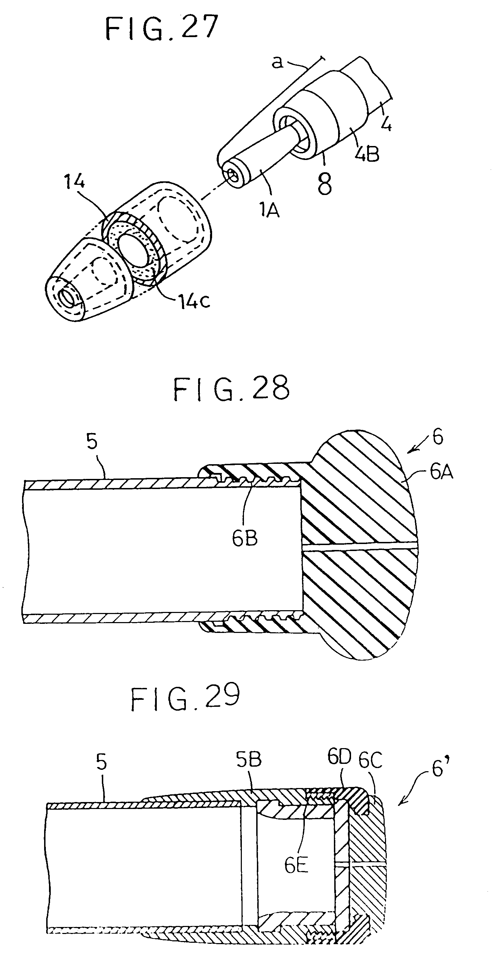

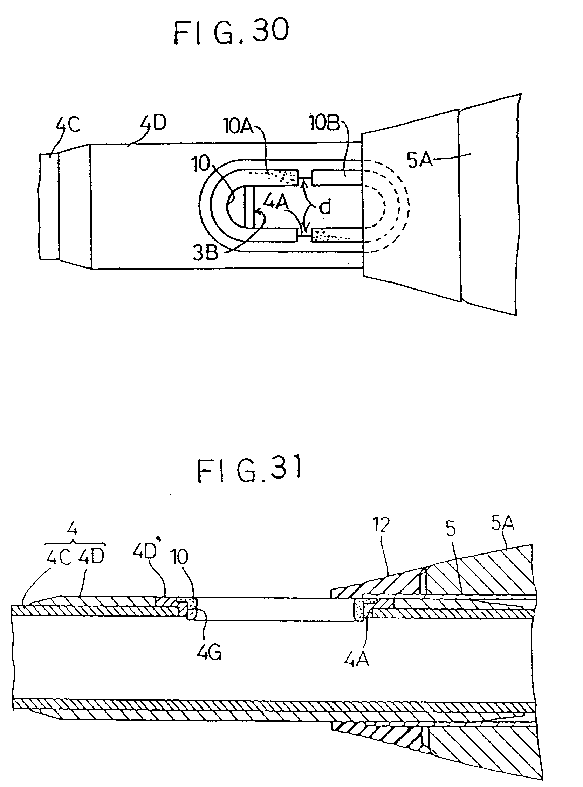

   In forming the contact member 8, it is also conceivable to form its body of a hard material of e.g. resin while heat-fusing a firm contact engagement member such as of rubber to the inner face thereof to be engaged with the leading end of the telescopic rod member 3.
(3) As the position maintaining portion 8, further constructions as follow are conceivable in place of providing the contact member 8.
   (a) As shown in Figs. 12 and 13, at an intermediate position in the outer face of the telescopic rod member 3, there is provided a mound of an element of e.g. prepreg on the tubular rod stock, thereby to form a bulging portion 3C. In correspondence with this bulging portion 3C, an inward bulging portion 4E is formed at an intermediate position in the inner face of the fore-butt rod member 4. Then, through pressure contact between these bulging portions 4E and 3E, the retracted state of the telescopic rod member 3 is set and determined. In this condition, the rear end opening 3B of the telescopic rod member 3 and the rear end opening 1B of the tiptop rod member 1 are located in the vicinity of the line entrance opening 4A. If the telescopic rod member 3 is further pressed from this retracted state with a greater manual force, the telescopic rod member 3, the rod member 2 and the tiptop rod member 1 are accommodated within the fore-butt rod member 4. The force of engagement between the two bulging portions 4E, 3E remains substantially the same for a predetermined axial range, so that the position of the rear end opening 3B may be varied through adjustment of the engaged position within the predetermined range.
      On the other hand, when the telescopic rod member 3 is withdrawn from the retracted state, the rear end 3C of the telescopic rod member 3 comes into engagement with the inner face of the opening of the fore-butt rod member 4, thereby to realize the protracted state.
   (b) In place of the bulging portion provided at an intermediate position of the telescopic rod member 3, a rubber ring is fitted on the tubular rod stock, so that this rubber ring comes into pressure contact with the bulging portion formed on the inner face of the fore-butt rod member 4 thereby to realize the retracted state of the telescopic rod member 3.
   (c) Though not shown, as an alternative construction of the position maintaining portion 8, it is conceivable to provide an index in the outer peripheral face of the leading end of the telescopic rod member 3. In operation, with depression of the telescopic rod member to a position where the index corresponds in position to the leading end of the fore-butt rod member 4, the rear end opening 3B comes to a position adjacent the line entrance opening 4A. Preferably, this arrangement should be provided in combination with the above-described mechanism.
   (d) In forming the bulging of the position maintaining portion 8 as described above, this portion may be formed of the same material (prepreg) as and integral with the rod stock 4C or may be formed as an additional mound of resin, paint or the like.
(4) A still further embodiment will be described next.
   As shown in Figs. 14(a), (b), the line entrance opening 3B may be formed in the telescopic rod member 3 which is protractible and retractable relative to the fore-butt rod member 4. In this case, in comparison with the arrangement of forming the line entrance opening 4A in the fore-butt rod member 4, the fishing line (a) fed from the reel 7 will be flexed by a smaller degree in the extending direction, so that the line feeding resistance may be reduced. From this condition, when all the rod members such as the telescopic rod member 3 are accommodated, the line entrance opening 3A is positioned forwardly of the leading end opening of the fore-butt rod member 4. Incidentally, the front portion of this line entrance opening 3B is formed in a cylindrical member provided separately from the telescopic rod member 3, so that the entrance opening together with this cylindrical member may be attachable to and detachable from the telescopic rod member 3.
   The line entrance opening may be formed in any intermediate rod member and should preferably be formed in an intermediate rod member, e.g. the fore-butt rod member, to to disposed close to the butt rod member. In this respect, the 'intermediate rod members' are referred to herein as those rod members excluding the tiptop rod member 1 and the butt rod member 5.
(5) A still further embodiment of the present invention will be described next.
   This embodiment relates to a telescopic type inner-line fishing rod and includes, as shown in Figs. 15(a), (b), a tiptop rod member 1, a rod member 2, a telescopic rod member 3, a fore-butt rod member 4 for telescopically accommodating the rod members 1, 2, 3, and a butt rod member 5 protractible and retractable relative to the fore-butt rod member 4. A butt end 6 is attached to a rear end of the butt rod member 5, and a reel 7 is attached to an intermediate position of the rod member 5 via a reel seat 15. A fishing line (a) fed from the reel 7 is to be introduced into the tiptop rod member 1 through an elongate line entrance opening 4A defined in an outer face of the fore-butt rod member 4.
   On the other hand, on an outer periphery of a rod stock 4C of the fore-butt rod member 4, there is firmly attached an outer engagement member 4D farmed of a resin softer than the rod stock 4C. And, the outer engagement member 4D defines, at an intermediate position thereof, a line inserting opening 4G acting as an opening for allowing insertion of the line and communicating with the above-described line entrance opening 4A for the fishing line (a). At the inner edge of the line inserting opening 4G and to the outer engagement member 4D acting as an attaching cylindrical member, there is fitted a guide ring 10 made of ceramic or stainless steel for restricting damage of the fishing line (as) through direct contact with the inner edge. In a retracted state, the rear end of the telescopic rod member 3 set at at the limit of retraction by a contact member 8 enters the opening area of the line entrance opening 4A. That is to say, as shown in Fig. 7, a line inserting opening 3B formed at the rear end of the telescopic rod member 3 may be seen from the outside through the line inserting opening 4G and the line entrance opening 4A. Accordingly, when a line inserting tool 11 to which the fishing line (a) is fixed is to be inserted into the telescopic rod member 3, this line inserting operation may be effected easily through the visual confirmation of the opening 3B
   Next, protracted and retracted states between the fore-butt rod member 4 and the butt rod member 5 will be described.
   As shown in Figs. 15 and 16, a bulging portion 4E is formed on an outer peripheral face of the fore-butt rod member 4 at a position forwardly of the outer engagement member 4D. This bulging portion 4E is fitted within the leading end of the butt rod member 5 and a rubber ring 12 and fixed at this condition. This bulging portion 4E may define a groove for avoiding locking of and preventing damage to the fishing line (a) in the retracted state.
   According to the above-described construction, as shown in Fig. 15(c), as the fore-butt rod member 4 is withdrawn to the limit to bring the rear end 4F of the fore-butt rod member 4 into engagement within the leading end of the butt rod member 5, so that the fore-butt rod member 4 may be maintained at this protracted state. Then, if the fore-butt rod member 4 is pressed from this protracted state, the outer engagement member 4D becomes engaged within the leading end of the butt rod member 5 and this condition is fixedly maintained. This condition will be referred to as a first retracted state. In this state, the line entrance opening 4A is positioned forwardly of the leading end of the butt rod member 5 and in the vicinity of this leading end. From this first retracted state, if the fore-butt rod member 4 is further pressed and retracted, the outer engagement member 4D is released from the fixed engagement with the leading end of the butt rod member 5 and is moved into the butt rod member 5. Then, the bulging portion 4E becomes engaged within the leading end of the butt rod member 5 to fix the fore-butt rod member 4 in position. This condition will be referred to as a second retracted state. In this state, the line entrance opening 4A enters the interior of the butt rod member 5 to be covered by the butt rod member 5.
   In the above-described construction, the three states are provided as the protracted or retracted states of the fore-butt rod member forming the line entrance opening 4A. Next, use of these states will be described. For a fishing operation, the protracted state is realized to position the line entrance opening 4A and the reel 7 away from each other, thereby to restrict the degree of flexion of the fishing line (a) at the line entrance opening 4A so as to reduce the feeding resistance of the fishing line (a). Then, when an angler moves to a different fishing site with the fishing line (a) held within the fishing rod, the fishing rod is set to the first retracted state. In this state, the fore-butt rod member 4 is retracted as much as possible to restrict flexion of the line (a) entering the rear end opening 1B of the tiptop rod member 1 inside the fishing rod. Further, by pressing and further retracting the fore-butt rod member 4 from the first retracted state, the fishing rod is set to the second retracted state, thereby to bring the line entrance opening 4A into the butt rod member 5.
   In combination with the line entrance opening 4A, a line inserting tool 16 may be provided as described next. As shown in Fig. 16, this line inserting tool 16 is provided for restricting the line feeding resistance. More particularly, the tool includes a body block 16A formed of resin and an inclined face 16B as a rear face thereof. Further, an inclined guide passage 16C is formed to extend normal to the inclined face 16B. The entrance opening of the inclined guide passage 16C is formed as a line inlet opening 16D, to which a guide ring 16E made of ceramic or stainless steel is fitted. At an exit of the inclined guide passage 16C, there is provided a guide pipe 16F made of stainless steel. Further, at forward and rear ends of this line inserting tool 16, there are provided engaging holes 16a, 16b for attachment. Also, at positions corresponding to these holes 16a, 16b, engaging pins 19a, 19b project from the fore-butt rod member 4. Then, with registration between the engaging holes 16a, 16b and the engaging pins 19a, 19b, when the line inserting tool 16 is pressed inwards, the engaging holes 16a, 16b are slightly elastically enlarged in diameter to allow firm engagement between the holes 16a, 16b and the pins 19a, 19b, thereby to fix the line inserting tool 16. For detachment, by strongly pulling the line inserting tool 16, the engaging pins 19a, 19b may be released from the engaging holes 16a, 16b. Incidentally, as a further construction for attaching and detaching the line inserting tool 16, in place of the combination of the engaging pins 19a, 19b and the engaging holes 16a, 16b, a threaded fixing construction may be employed.
(6) A still further embodiment of the present invention will be described next.
   The telescopic rod member 3, the rod member 2 and the tiptop rod member 1 which are to be attached to the fore-butt rod member 4, may be provided as separate type rod members. That is, as shown in Fig. 18, as the intermediate rod member to be joined to the fore-butt rod member 4, a separate intermediate rod member 3' is provided in place of the telescopic rod member 3. This intermediate rod member 3' includes, at a rear end thereof, a tapered engaging recess (b) tapered inwardly. Then, for engagement with this tapered engaging recess (b), a corresponding tapered engaging projection (c) is formed at the leading end of the fore-butt rod member 4, thus providing a separate joint rod construction. The rod member 1 and the tiptop rod member 1 too are provided as separate rod members. However, the rod member 2 and the tiptop rod member 1 may be provided as telescopic rod members to be joined to the intermediate rod member 3' as well.
(7) As shown in Fig. 19(a), through rational arrangement of the length relationship among the components of the butt rod member 5, the fore-butt rod member 4, the telescopic rod member 3 and so on and if the head portion 4B of the fore-butt rod member 4 is adapted to be engaged within the leading end of the butt rod member 5, all the other rod members may be accommodated inside the butt rod member 5. With this, with fitting the cap 14 to the leading end of the butt rod member 5, the entire rod may be stored in a compact manner. Accordingly, there is no need to form the bulging portion 4E at the intermediate position of the fore-butt rod member 4.
(8) As shown in Figs. 20(a), (b), (c), the bulging portion 4E and the outer diameter of the outer engagement member 4D may be formed smaller than the inner diameter of the leading end of the butt rod member 5, thereby to engage the bulging portion 4E and the outer engagement member 4D at a portion 5B rearwardly of the leading end of the butt rod member 5. The above-described construction will be referred to as a position maintaining means for maintaining the position of the fore-butt rod member 4 relative to the butt rod member 5 selectively at one of the protracted state and the first and second retracted states.
(9) As shown in Fig. 21, the rear end of the tiptop rod member 1 located in the vicinity of the line entrance opening 4A in the retracted state is caused to project from the rear end of the telescopic rod member 3, so that the rear end opening 1B of the tiptop rod member 1 may be visually confirmed through the line entrance opening 4A.
(10) As shown in Fig. 22, the rear end of the telescopic rod member 3 located in the vicinity of the line entrance opening 4A in the retracted state is formed as an inclined face inclined toward the line entrance opening 4A and the rear end opening 3B is formed in this inclined face, with the guide ring 13 being attached along this inclined face.
(11) A still further embodiment of the present invention will be described next.
   The rubber ring 12 may be alternatively constructed as shown in Fig. 23.
   More specifically, a forward end 5a of a large-diameter grip portion 5A is caused to extend to the outer periphery of the rubber ring member 12, so that this forward end 5a surrounds the rubber ring 12 to support the same from the outside in order to prevent loosening of the engagement between the rubber ring member 12 and the attaching member 4D.
   Fig. 24 shows a still further construction. In this, a pin-like portion 12A projects from the rear of the rubber ring member 12 and the grip portion 5A defines a recess 5b. Then, through engagement between the pin-like portion 12A and the recess 5b, a reaction force to be applied to the rubber ring member 12 in the course of its engagement with the outer cylindrical member 4D may be dissipated to the grip portion 5A.
   A still further construction is shown in Fig. 25. In this case, the outer peripheral face of the rubber ring member 12 which comes into contact with the outer cylindrical member 4D may be formed as a portion 12B for providing spline-like partial contact state. This may provide a greater elastic supporting force.
(12) Fig. 26 shows a further construction of the cap 14.
   In this, for allowing withdrawal of the line (a) to the outside with the cap 14 attached, an axial groove 14b is defined in the inner peripheral face of the cylindrical cap 14, so that the line (a) may be placed within this groove 14b. Further, a plurality of this groove 14b may be provided in parallel to each other along the peripheral direction.
   A still further construction is shown in Fig. 27. In this case, a soft cylindrical portion 14c formed of e.g. a sponge is formed on the inner peripheral face of the cylindrical cap 14. Then, with the firm attachment of the cylindrical cap 14 to its mating member, the fishing line (a) may sink into the soft cylindrical portion 14c thereby to protect the line (a) against damage.
(13) A further construction of the butt end 6 is shown in Fig. 28.
   In this, a body 6A formed of soft rubber defines, at a forward position thereof, a rearward recess, and a threaded portion 6B formed of hard rubber is formed on the inner peripheral face of said recess. So that, the butt end 6 may be outwardly fixed on the rear end of the butt rod member 5. In the case of the above construction where soft rubber and hard rubber are employed in combination, when the angler swings the fishing rod with keeping the butt end 6 against his/her abdomen, the soft portion is placed in contact with the abdomen. Thus, the angler may feel comfortable. Also, the threaded portion provides a strong engagement.
(14) Further, as shown in Fig. 29, the butt cap 6' may be constructed from a combination of soft rubber and hard rubber. Specifically, a soft rubber ring 6D is attached to an aluminum body 6C. And, a forward end of this rubber ring 6D is caused to extend in a cylindrical form, and in an inner peripheral face of this cylindrical forward end of the rubber ring 6D, an internal thread type threaded portion 6E made of hard rubber is provided to be threaded with the butt ring 5B provided at the rear end of the butt rod member 5.
(15) The guide ring 10 may be alternatively constructed as follows.
   (a) As shown in Fig. 30, the guide ring may be constructed as two-halves construction consisting of a forward ring portion 10A and a rear ring portion 10B. Further, a gap (d) between the two portions 10A, 10B may be eliminated if desired. However, as shown in the same drawing, by providing the gap (d), in comparison with such construction in which the two ring portions 10A, 10B are substantially continuous from each other, the ring become slightly easier to bend when a transverse pressure is applied to the two ring portions 10A, 10B due to flexion of the fishing rod , so that the ring may be less vulnerable to damage. Further, in order to reduce the number of components, the guide ring may consist of only the forward ring portion 10A which the fishing line (a) contacts mainly.
   (b) As shown in Fig. 31, the line entrance opening 4A is reinforced by an element, and this element defines the line inlet opening 4G to which the guide ring 10 is fitted. In this case, a disc-like member 4D' slightly larger than the opening edge of the line entrance opening 4A is attached to the attaching member 4D in such a manner that a brim portion of the disc-like member reaches the line entrance opening 4A. Then, from the outside of this disc-like member 4D', the guide ring 10 as shown is fixedly attached. As means for fixing the guide ring 10, this means may not necessarily comprise the cylindrical shape as the afore-described attaching cylindrical member. Thus, the disc-like member, the attaching cylindrical member of the like will be generically referred to as the attaching member 4D.
(16) Further, the shape of the line inlet opening 4G is not limited to the elongated shape shown in the drawing, but may be any other shape, such as an oval shape, a circular shape.

The attaching member 4D made of soft material may be formed of any material softer than the rod stock 4C. For instance, instead of the resin material, this member may be formed of rubber material or prepreg material.

The opening edge portion to which the guide ring 10 is to be fitted need not be provided with a member different from the fore-butt rod member. Instead, this attaching portion may be formed softer by increasing the ratio of resin relative to the reinforcing fiber at this attaching portion alone. Such arrangement together with the attaching member 4D will be generically referred to as a soft portion for attaching the guide ring 10.

The guide ring 10 need not be inserted within the line entrance opening 4A. Instead, a portion of this guide ring 10 may project from the surface of the rod.

In the above embodiments, as the rod member 2, more than one rod members may be employed. Or, conversely, this rod member 2 may be eliminated.

With the above constructions of the fishing rod, the line entrance opening 4A is defined in the fore-butt rod member 4. Instead, this line entrance opening may be defined in the rod member 2. In this case, the fore-butt rod member comprises the butt-side rod member and the rod member comprises the telescopic rod member. Needless to say, when the line entrance opening is defined in the butt rod member 5, this butt rod member comprises the butt-side rod member and the fore-butt rod member- comprises the telescopic rod member.

As long as the fore-butt rod member and the telescopic rod member are telescopically joined to each other, the other rods need not be constructed as telescopic rod members. That is, the rod member 2, the tiptop rod member 1 and so on may be provided as separate type rod members.

The guide ring 10 to which the line entrance opening 4A is to be provided may be attached to the rod stock 4C.

The present embodiments are to be considered in all respects as illustrative and not restrictive, with the scope of the invention being indicated by the appended claims.

## Claims

1. An inner-line fishing rod having:
a fore-butt rod member (4);
a line entrance opening (4A) defined in an outer surface of the fore-butt rod member (4);
a telescopic rod member (3) accommodatable inside said fore-butt rod member (4) to be protractible from and retractable into the fore-butt rod member (4);
an inner opening (3B) defined at a rear end of said telescopic rod member (3) for allowing introduction of a fishing line (a) into said telescopic rod member (3);
wherein a protracted state of said telescopic rod member (3) is maintained by engagement between the rear end of said telescopic rod member (3) and the inner face of the forward end of said fore-butt rod member (4),
characterized in that
a retracted state of said telescopic rod member (3) is held and maintained in position by a position maintaining portion (8;3c) provided on said telescopic rod member (3) forwardly of said rear end inner opening (3B), with said position maintaining portion (8;3c) being adapted to come into contact with said fore-butt rod member (4) when said telescopic rod member (3) is retracted, such that the retracted position of the telescopic rod member (3) can be determined when said line entrance opening (4A) and said inner opening (3B) are positioned adjacent to each other.

2. An inner-line fishing rod as claimed in Claim 1,
characterized in that
said position maintaining portion (8) comprises a contact element capable of coming into contact with the forward end of the fore-butt rod member (4) when said telescopic rod member (3) is retracted, said contact element being detachably attached to said telescopic rod member (3).

3. An inner-line fishing rod as claimed in Claim 1,
characterized in that
a tiptop rod member (1) to be protractibly and retractably accommodated within said telescopic rod member (3) defines an opening (1B) for allowing introduction of the fishing line (a) into said tiptop rod member (1), a retaining mechanism (9) being provided for retaining said tiptop rod member (1) at a retracted state thereof in such a manner as to locate said opening 1B of said tiptop rod member (1) in the vicinity of said inner opening (3B) of said telescopic rod member (3).

4. An inner-line fishing rod as claimed in any one of Claims 1 to 3,
characterized in that
said line entrance opening(4A) comprises an elongate opening having a major axis thereof aligned with an axis of the fishing rod.

5. An inner-line fishing rod as claimed in Claim 1,
characterized in that
said position maintaining portion (8) comprises a bulging portion which comes into contact with an inner peripheral face of said fore-butt rod member ( 4) when said telescopic rod member ( 3) is set to said retracted state.

6. An inner-line fishing rod as claimed in any one of Claims 1 to 5,
characterized by
a line guide passage for guiding the fishing line (a) introduced from said openings (3B, 4A) into an interior of said tiptop rod member( 1) and feeding the line (a) from a leading end of said tiptop rod member 1 to the outside.

7. An inner-line fishing rod as claimed in Claim 6,
characterized in that
said openings (3B, 4A) are defined in said rod members (3, 4) constituting intermediate rod members;
said openings (3B, 4A) are positioned forwardly of an opening of a butt rod member (5) when said rod members (3, 4) are accommodated within said butt rod member (5) including a reel seat (15) ;and
said openings (3B, 4A) are positioned further forwardly of said positions thereof corresponding to the accommodated condition when said rod members (3, 4) are protracted relative to said butt rod member (5).

8. An inner-line fishing rod as claimed in any one of claims 1 to 7, having:
a butt rod member (5) including a reel seat (15);
a fore-butt rod member (4) having a diameter smaller than said butt rod member (5) and being protractible and retractable relative to said butt rod member (5);
a line entrance opening (4A) defined in an outer surface of said fore-butt rod member (4);
characterized by
position maintaining means for positioning said line entrance opening (4A) inside said butt rod member (5) when said fore-butt rod member (4) is retracted into said butt rod member (5) and for positioning said line entrance opening ( 4A) forwardly and outwardly of a front end of said butt rod member (5) when said fore-butt rod member (4) is protracted from said butt rod member (5).

9. An inner-line fishing rod as claimed in Claim 8,
characterized in that
said position maintaining means is adapted to selectively provide;
a protracted state in which said fore-butt rod member 4 is protracted from said butt rod member (5) so as to place said line entrance opening (4A) forwardly distant from the forward end of said butt rod member (5),
a first retracted state realized by a first-step retracting operation from said protracted state in which said fore-butt rod member (4) is retracted into said butt rod member (5) so as to fixedly position said line entrance opening (4A) forwardly of the forward end of said butt rod member (5) and in the vicinity of the same, and
a second retracted state realized by a second-step retracting operation in which said fore-butt rod member (4) is further retracted into said butt rod member (5) so as to place said line entrance opening (4A) inside said butt rod member (5).

10. An inner-line fishing rod as claimed in Claim 9,
characterized in that
said position maintaining means for maintaining the fore-butt rod member (4) at the first retracted state includes an outer engagement member (4D) formed of a material softer than material forming a rod stock and outwardly engaging the portion of the fore-butt rod member (4) forming the line entrance opening (4A) and an inner face of the opening of the butt rod member (5) to be fitted on the outer engagement member (4D).

11. An inner-line fishing rod as claimed in Claim 9,
characterized in that
to the portion of the fore-butt rod member (4) forming said line entrance opening (4A), there is detachably attached a line inserting tool (16) projecting from an outer peripheral face of the fore-butt rod member (4),
said line inserting tool (16) includes an outwardly-oriented inclined face (16B) extending normal to the axis of said fore-butt rod member (4),and
said inclined face (16B) defines a line inlet opening (16D)which acts as an inclined guide passage (16C )communicating with the line entrance opening (4A).

12. An inner-line fishing rod as claimed in any one of claims 8 to 11,
characterized by
a telescopic rod member (3) to be protractibly and retractably accommodated within said fore-butt rod member (4 ),a protracted state of said rod member (3) being maintained by engagement between a rear end of said telescopic rod member (3) and an inner face of a leading end of said fore-butt rod member (4);
an inner opening (3B) defined at the rear end of said telescopic rod member (3) for allowing insertion of the fishing line (a) into said telescopic rod member (3);
said position maintaining means is adapted to selectively provide;
a protracted state in which said fore-butt rod member (4) is protracted from said butt rod member (5) so as to place said line entrance opening (4A) forwardly distant from the forward end of said butt rod member (5),
a first retracted state realized by a first-step retracting operation from said protracted state in which said fore-butt rod member (4) is retracted into said butt rod member (5) so as to fixedly position said line entrance opening (4A) forwardly of the forward end of said butt rod member (5) and in the vicinity of the same, and
a second retracted state realized by a second-step retracting operation in which said fore-butt rod member (4) is further retracted into said butt rod member (5) so as to place said line entrance opening (4A) inside said butt rod member (5);and
a position maintaining portion (8) for placing said inner opening (3B) of said telescopic rod member (3) to a position adjacent said line entrance opening (4A) with said first step of retracting operation.

13. An inner-line fishing rod as claimed in any one of Claims 1 to 12,
characterized in that
a guide ring (10) formed of hard material is fitted to opening edges of said line entrance opening (4A, 4G), and a portion of the line entrance opening (4A, 4G) to which said guide ring (10) is fitted is formed of material softer than material forming the remaining portion of the fore-butt rod member (4).

14. An inner-line fishing rod as claimed in any one of Claims 1 to 13,
characterized in that
an attachment cylinder member (4D) formed of material softer than material forming the fore-butt rod member (4) is firmly attached to an outer peripheral face of the fore-butt rod member (4),and a guide ring (10) formed of material harder than the material forming the fore-butt rod member (4) is fitted to an opening edge of an line inlet opening (4G) communicating with said line entrance opening (4A).

15. An inner-line fishing rod as claimed in Claim 14,
characterized in that
said fore-butt rod member (4) is protractibly and retractably accommodated in a butt rod member (5) including a reel seat (15), and a position maintaining means is provided for selectively providing a protracted state in which the fore-butt rod member (4) is withdrawn from the butt rod member (5) so as to place the line entrance opening (4G) forwardly distant from the forward end of the butt rod member (5) and a retracted state in which the fore-butt rod member (4) is retracted from the protracted state so as to place the line entrance opening (4G) forwardly of the forward end of the butt rod member (5) in the vicinity of the same; and
in said retracted state, the forward end of said butt rod member (5) comes into engagement with said attachment cylinder member (4D).

## Patentansprüche

1. Angelrute mit innerer Schnurführung, die folgendes hat:
ein Vorderstückrutenglied (4);
eine Schnureintrittsöffnung (4a), die in einer äußeren Oberfläche des Vorderstückrutenglieds (4) definiert ist;
ein teleskopisches Rutenglied (3), das in dem Vorderstückrutenglied (4) untergebracht werden kann, um von dem Vorderstückrutenglied (4) ausgezogen und in es eingezogen werden kann;
eine innere Öffnung (3B), die an einem hinteren Ende des teleskopischen Rutenglieds (3) definiert ist, um Einführung einer Angelschnur (a) in das teleskopische Rutenglied (3) zu gestatten;
in der ein ausgezogener Zustand des teleskopischen Rutenglieds (3) durch Eingriff zwischen dem hinteren Ende des teleskopischen Rutenglieds (3) und der inneren Fläche des vorderen Endes des Vorderstückrutenglieds (4) erhalten wird,
dadurch gekennzeichnet, dass
ein eingezogener Zustand des teleskopischen Rutenglieds (3) von einem Kontaktglied (8) das als ein Stellungserhaltungsglied wirkt, das auf dem teleskopischen Rutenglied (3) vorwärts von der inneren Öffnung (3B) des hinteren Endes geliefert ist, in seiner Stellung gehalten und erhalten wird, wobei das Kontaktglied mit dem Vorderstückrutenglied (4) in Kontakt kommen kann, wenn das teleskopische Rutenglied (3) eingezogen ist, so dass die eingezogene Stellung des teleskopischen Rutenglieds (3) bestimmt werden kann, wenn die Schnureintrittsöffnung (4A) und die innere Öffnung nebeneinander angeordnet sind.

2. Angelrute mit innerer Schnurführung nach Anspruch 1,
dadurch gekennzeichnet, dass
das das Stellungserhaltungsteil (8) ein Kontaktelement umfasst, das mit dem vorderen Ende des Vorderstückrutenglieds (4) in Kontakt kommen kann, wenn das teleskopische Rutenglied (3) eingezogen ist, wobei das Kontaktelement abnehmbar an dem teleskopischen Rutenglied (3) befestigt ist.

3. Angelrute mit innerer Schnurführung nach Anspruch 1,
dadurch gekennzeichnet, dass
ein Spitzenrutenglied (1), das ausziehbar und einziehbar in dem teleskopischen Rutenglied (3) untergebracht sein soll, eine Öffnung (1B) definiert, um Einführung der Angelschnur (a) in das Spitzenrutenglied (1) zu gestatten, wobei ein Rückhaltemechanismus (9) geliefert ist, um das Spitzenrutenglied (1) in einem eingezogenen Zustand davon in einer solchen Weise zurückzuhalten, um die Öffnung 1B des Spitzenrutenglieds (1) in der Nachbarschaft der inneren Öffnung (3B) des teleskopischen Rutenglieds (3) anzuordnen.

4. Angelrute mit innerer Schnurführung nach einem der Ansprüche 1 bis 3,
dadurch gekennzeichnet, dass
die Schnureintrittsöffnung (4A) eine langgestreckte Öffnung unfasst, die eine Hauptachse davon mit einer Achse der Angelrute ausgerichtet hat.

5. Angelrute mit innerer Schnurführung nach Anspruch 1,
dadurch gekennzeichnet, dass
das Stellungserhaltungsteil (8) ein hervorstehendes Teil umfasst, das mit einer inneren peripheren Fläche des Vorderstückrutenglieds (4) in Kontakt kommt, wenn das teleskopische Rutenglied (3) in dem eingezogenen Zustand eingestellt ist.

6. Angelrute mit innerer Schnurführung nach einem der Ansprüche 1 bis 5,
gekennzeichnet durch
einen Schnurführungsdurchgang zum Führen der Angelschnur (a), die von den Öffnungen (3B, 4A) in ein Inneres des Spitzenrutenglieds (1) eingeführt wird, und Bringen der Schnur (a) von einem führenden Ende des Spitzenrutenglieds 1 zur Außenseite.

7. Angelrute mit innerer Schnurführung nach Anspruch 6,
dadurch gekennzeichnet, dass
die Öffnungen (3B, 4A) in den Rutengliedem (3, 4) definiert sind, die mittlere Rutenglieder ausmachen;
wobei die Öffnungen (3B, 4A) vorwärts von einer Öffnung eines Endstückrutenglieds (5) angeordnet sind, wenn die Rutenglieder (3, 4) in dem Endstückrutenglied (5) untergebracht sind, das einen Windensitz einschließt; und
wobei die Öffungen (3B, 4A) von den Stellungen davon, die dem untergebrachten Zustand entsprechen, weiter vorwärts angeordnet sind, wenn die Rutenglieder (3, 4) relativ zu dem Endstückrutenglied (5) ausgezogen sind.

8. Angelrute mit innerer Schnurführung nach einem der Ansprüche 1 bis 7, die folgendes hat:
ein Endstückrutenglied (5), das einen Windensitz (15) einschließt;
ein Vorderstückrutenglied (4), das einen Durchmesser hat, der kleiner als das Endstückrutenglied (5) ist und das relativ zu dem Endstückrutenglied (5) ausgezogen und eingezogen werden kann;
eine Schnureintrittsöffnung (4A), die in einer äußeren Oberfläche des Vorderstückrutenglieds (4) definiert ist;
gekennzeichnet durch
ein Stellungserhaltungsmittel zum Anordnen der Schnureintrittsöffnung (4A) in dem Endstückrutenglied (5), wenn das Vorderstückrutenglied (4) in das Endstückrutenglied (5) eingezogen ist, und zum Anordnen der Schnureintrittsöffnung (4A) vorwärts und auswärts von einem vorderen Ende des Endstückrutenglieds (5), wenn das Vorderstückrutenglied (4) von dem Endstückrutenglied (5) ausgezogen ist.

9. Angelrute mit innerer Schnurführung nach Anspruch 8,
dadurch gekennzeichnet, dass
das Stellungserhaltungsmittel wahlweise folgendes liefern kann;
einen ausgezogenen Zustand in dem das Vorderstückrutenglied (4) von dem Endstückrutenglied (5) ausgezogen ist, um die Schnureintrittsöffnung (4A) vorwärts entfernt von dem vorderen Ende des Endstückrutenglieds (5) anzuordnen,
einen ersten eingezogenen Zustand, der von einem Eirzugsbetrieb eines ersten Schritts von dem ausgezogenen Zustand verwirklicht wird, in dem das Vorderstückrutenglied (4) in das Endstückrutenglied (5) eingezogen wird, um die Schnureintrittsöffnung (4A) vorwärts von dem vorderen Ende des Endstückrutenglieds (5) und in der Nachbarschaft desselben anzuordnen, und
einen zweiten eingezogenen Zustand, der von einem Einzugsbetrieb eines zweiten Schritts verwirklicht wird, in dem das Vorderstückrutenglied (4) weiter in das Endstückrutenglied (5) eingezogen wird, um die Schnureintrittsöffnung (4A) in das Endstückrutenglied (5) zu bringen.

10. Angelrute mit innerer Schnurführung nach Anspruch 9,
dadurch gekennzeichnet, dass
das Stellungserhaltungsmittel zum Erhalten des Vorderstückrutenglieds (4) in der ersten eingezogenen Stellung ein äußeres Eingriffsglied (4D) einschließt, das aus einem Material gebildet ist, das weicher als das Material ist, das einen Rutenschaft bildet, und das in das Teil des Vorderstückrutenglieds (4) auswärts eingreift, das die Schnureintrittsöffnung (4A) und eine innere Fläche der Öffnung des Endstückrutenglieds (5) bildet, das an dem äußeren Eingriffsglied (4D) angebracht werden soll.

11. Angelrute mit innerer Schnurführung nach Anspruch 9,
dadurch gekennzeichnet, dass
an dem Teil des Vorderstückrutenglieds (4), das die Schnureintrittsöffnung (4A) bildet, ein Schnureinschubwerkzeug (16) abnehmbar befestigt ist, das von einer äußeren peripheren Fläche des Vorderstückrutenglieds (4) hervorragt,
das Schnureinschubwerkzeug (16) eine nach außen ausgerichtete geneigte Fläche (16B) einschließt, die sich normal zu der Achse des Vorderstückrutenglieds (4) erstreckt, und die geneigte Fläche (16B) eine Schnureinlassöffnung (16D) definiert, die als ein geneigter Führungsdurchgang (16C) wirkt, der mit der Schnureintrittsöffnung (4A) in Verbindung steht.

12. Angelrute mit innerer Schnurführung nach einem der Ansprüche 8 bis 11,
gekennzeichnet durch
ein teleskopisches Rutenglied (3) das ausziehbar und einziehbar in dem Vorderstückrutenglied (4) untergebracht werden soll, wobei ein ausgezogener Zustand des Rutenglieds (3) durch Eingriff zwischen einem hinteren Ende des teleskopischen Rutenglieds (3) und einer inneren Fläche eines führenden Endes des Vorderstückrutenglieds (4) erhalten wird;
eine innere Öffnung (3B), die an dem hinteren Ende des teleskopischen Rutenglieds (3) definiert ist, um Einschub der Angelschnur (a) in das teleskopische Rutenglied (3) zu gestatten;
wobei das Stellungserhaltungsmittel wahlweise folgendes liefern kann;
einen ausgezogenen Zustand in dem das Vorderstückrutenglied (4) von dem Endstückrutenglied (5) ausgezogen ist, um die Schnureintrittsöffnung (4A) vorwärts entfernt von dem vorderen Ende des Endstückrutenglieds (5) anzuordnen,
einen ersten eingezogenen Zustand, der von einem Einzugsbetrieb eines ersten Schritts von dem ausgezogenen Zustand verwirklicht wird, in dem das Vorderstückrutenglied (4) in das Endstückrutenglied (5) eingezogen wird, um die Schnureintrittsöffnung (4A) vorwärts von dem vorderen Ende des Endstückrutenglieds (5) und in der Nachbarschaft desselben anzuordnen, und
einen zweiten eingezogenen Zustand, der von einem Einzugsbetrieb eines zweiten Schritts verwirklicht wird, in dem das Vorderstückrutenglied (4) weiter in das Endstückrutenglied (5) eingezogen wird, um die Schnureintrittsöffnung (4A) in das Endstückrutenglied (5) zu bringen; und
ein Stellungserhaltungsglied (8), um die innere Öffnung (3B) des teleskopischen Rutenglieds (3) in eine Stellung neben der Schnureintrittsöffnung (4A) mit dem Eirzugsbetrieb des ersten Schritts zu bringen.

13. Angeltute mit innerer Schnurführung nach einem der Ansprüche 1 bis 12,
dadurch gekennzeichnet, dass
ein Führungsring (10), der aus einem harten Material gebildet ist, an Öffnungskanten der Schnureintrittsöffnungen (4A, 4G) angebracht ist, und ein Teil der Schnureintrittsöffnung (4A, 4G), an das der Führungsring (10) angebracht ist, aus einem Material gebildet ist, das weicher als das Material ist, das das verbleibende Teil des Vorderstückrutenglieds (4) bildet.

14. Angelrute mit innerer Schnurführung nach einem der Ansprüche 1 bis 13,
dadurch gekennzeichnet, dass
ein Befestigungszylinderglied (4D), das aus einem Material gebildet ist, das weicher als das Material ist, das das Vorderstückrutenglied (4) bildet, fest an einer äußeren peripheren Fläche des Vorderstückrutenglieds (4) befestigt ist, und ein Führungsring (10), der aus einem Material gebildet ist, das härter als das Material ist, das das Vorderstückrutenglied (4) bildet, an einer Öffnungskante einer Schnureinlassöffnung (4G) angebracht ist, die mit der Schnureintrittsöffnung (4A) in Verbindung steht.

15. Angelrute mit innerer Schnurführung nach Anspruch 14,
dadurch gekennzeichnet, dass
das Vorderstückrutenglied (4) ausziehbar und einziehbar in einem Endstückrutenglied (5) untergebracht ist, das einen Windensitz (15) einschließt, und ein Stellungserhaltungsmittel geliefert ist, um wahlweise einen ausgezogenen Zustand zu liefern, in dem das Vorderstückrutenglied (4) aus dem Endstückrutenglied (5) gezogen ist, um die Schnureintrittsöffnung (4G) vorwärts entfernt von dem vorderen Ende des Endstückrutenglieds (5) anzubringen, und einen eingezogenen Zustand, in dem das Vorderstückrutenglied (4) von dem ausgezogenen Zustand eingezogen ist, um die Schnureintrittsöffnung (4G) vorwärts von dem vorderen Ende des Endstückrutenglieds (5) in die Nachbarschaft desselben zu bringen;
und
das vordere Ende des Endstückrutenglieds (5) in dem eingezogenen Zustand mit dem Befestigungszylinderglied (4D) in Eingriff kommt.

## Revendications

1. Canne à pêche à fil intérieur comportant:
un élément d'avant-manche de canne à pêche (4);
une ouverture d'entrée de fil (4A) définie par une surface extérieure d'élément d'avant-manche de canne à pêche (4);
un élément télescopique de canne (3) logeant à l'intérieur dudit élément d'avant-manche de canne (4) admettant le mouvement protractile ou rétractile de l'élément d'avant-manche de canne à pêche (4);
une ouverture intérieure (3B) définie à une extrémité arrière dudit élément télescopique de canne (3) permettant l'introduction d'une ligne de pêche (a) dans ledit élément télescopique de canne (3);
dont l'état protractile dudit élément télescopique de canne (3) est maintenu par la prise entre l'extrémité arrière dudit élément télescopique de canne (3) et la face intérieure de l'extrémité avant dudit élément d'avant-manche de canne à pêche (4),
**caractérisé en ce que,**
l'état rétractile dudit élément télescopique de canne (3) est retenu et gardé en position par un élément de contact (8) servant de portion de maintien de position prévue sur ledit élément télescopique de canne (3) à l'avant de ladite ouverture intérieure d'extrémité arrière (3B), ledit élément de contact étant adapté pour venir en contact avec ledit élément d'avant-manche de canne à pêche (4) suite à la rétraction dudit élément télescopique de canne (3), de façon telle que la position rétractée de l'élément télescopique de canne (3) peut se déterminer lorsque ladite entrée de fil (4A) et ladite ouverture intérieure (3B) se trouvent en position adjacente l'une à l'autre.

2. Canne à pêche à fil intérieur tel que revendiqué à la revendication 1,
**caractérisé en ce que,**
ladite portion de maintien de position (8) comporte un élément de contact (8) élément de contact susceptible de venir en contact avec l'extrémité avant de l'élément avant de manche de canne (4) lorsque ledit élément télescopique de canne (3) est rétracté, ledit élément de contact étant fixé de façon amovible audit élément télescopique de canne (3).

3. Canne à pêche à fil intérieur tel que revendiqué à la revendication 1,
**caractérisé en ce que,**
un élément de scion de canne à pêche (1) protractile et rétractile logeant dans ledit élément télescopique de canne (3) définit une ouverture (1B) permettant l'introduction du fil de pêche (a) dans ledit élément de scion de canne (1), un mécanisme de retenue (9) étant prévu pour retenir ledit élément de scion de canne (1) en son état rétractile de telle manière à situer ladite ouverture 1B dudit élément de scion de canne (1) à proximité de ladite ouverture (3B) dudit élément télescopique de canne (3).

4. Canne à pêche à fil intérieur tel que revendiqué à l'une ou l'autre des revendications 1 à 3,
**caractérisé en ce que,**
ladite ouverture d'entrée de fil (4A) comporte une ouverture allongée dont un axe majeur est aligné avec un axe de la canne à pêche.

5. Canne à pêche à fil intérieur tel que revendiqué à la revendication 1,
**caractérisé en ce que,**
ladite portion de maintien de contact (8) comporte une portion enflée qui vient en contact avec une face périphérique intérieure dudit élément d'avant-manche de canne à pêche (4) lorsque ledit élément télescopique de canne (3) est ajusté dans ledit état rétractile.

6. Canne à pêche à fil intérieur tel que revendiqué à l'une ou l'autre des revendications 1 à 5,
**caractérisé en ce que,**
un passage guide-fil susceptible de guider le fil de pêche (a) introduit depuis lesdites ouvertures (3B, 4A) à l'intérieur dudit élément de scion de canne(1) et amenant le fil (a) depuis une extrémité d'attaque dudit élément de scion de canne 1 vers l'extérieur.

7. Canne à pêche à fil intérieur tel que revendiqué à la revendication 6,
**caractérisé en ce que,**
lesdites ouvertures (3B, 4A) sont définies dans lesdits éléments de canne (3,4) formant les éléments intermédiaires de la canne à pêche;
lesdites ouvertures (3B, 4A) se situent à l'avant d'une ouverture de manche de canne (5) lorsque lesdits éléments de canne (3,4) logent dans ledit élément de manche de canne (5) y compris un porte-moulinet (15); et
lesdites ouvertures (3B, 4A) se situent plus en avant desdites positions qui correspondent à l'état logé lorsque lesdits éléments de canne à pêche (3,4) se trouvent à l'état protractile par rapport à l'élément de manche de canne à pêche (5).

8. Canne à pêche à fil intérieur tel que revendiqué à l'une ou l'autre des revendications 1 à 7:
un élément de manche de canne à pêche (5) ayant un porte-moulinet (15);
un élément d'avant-manche de canne à pêche (4) dont le diamètre est inférieur à celui dudit élément de manche de canne à pêche (5) et de conception protractile et rétractile par rapport à l'élément de manche de canne à pêche (5);
une ouverture d'entrée de fil (4A) définie dans une surface extérieure dudit élément d'avant-manche de canne (4);
**caractérisé en ce que,**
un moyen de maintien de la position pour positionner ladite ouverture d'entrée de fil (4A) à l'intérieur dudit élément de manche de canne à pêche (5) lorsque ledit élément d'avant-manche de canne (4) est rétracté dans ledit élément de manche de canne à pêche (5) et pour positionner ladite ouverture d'entrée de fil (4A) vers l'avant et vers l'extérieur de l'extrémité avant dudit élément de manche de canne à pêche (5) lorsque ledit élément d'avant-manche de canne (4) est avancé depuis ledit élément de manche de canne (5).

9. Canne à pêche à fil intérieur tel que revendiqué à la revendication 8,
**caractérisé en ce que,**
ledit moyen de maintien de position est adapté pour assurer sélectivement;
l'état protractile selon lequel l'élément d'avant-manche de canne (4) est avancé depuis ledit élément de manche de canne(5) de façon telle à amener ladite ouverture d'entrée de fil (4A) à distance en avant de l'extrémité avant dudit élément de manche de canne (5),
un premier état rétracté réalisé à partir d'une opération de première phase de rétraction depuis l'état protractile selon lequel l'élément d'avant-manche de canne (4) est rétracté dans l'élément de manche de canne(5) de telle façon à fixer en position ladite ouverture d'entrée de fil (4A) en avant de l'extrémité avant de l'élément de manche de canne(5) et en à proximité, et
un deuxième état rétracté réalisé à partir d'une opération de deuxième phase rétractile selon laquelle ledit élément d'avant-manche de canne (4) est rétracté plus loin dans ledit élément de manche de canne(5) de telle façon à amener ladite ouverture d'entrée de fil (4A) à l'intérieur de l'élément de manche de canne(5).

10. Canne à pêche à fil intérieur tel que revendiqué à la revendication 9,
**caractérisé en ce que,**
ledit moyen de maintien de position retenant l'élément d'avant-manche de canne (4) en premier état protractile prévoit un élément extérieur de prise (4D) formé à partir d'une matière plus souple que la matière formant le manche de la canne et extérieurement en prise avec la portion d'élément d'avant-manche de canne (4) formant l'ouverture d'entrée de fil (4A) et une face intérieure de l'ouverture de l'élément de manche de canne(5) à installer sur l'élément extérieur de prise (4D).

11. Canne à pêche à fil intérieur tel que revendiqué à la revendication 9,
**caractérisé en ce que,**
il est attaché amovible à la portion d'élément d'avant-manche de canne (4) formant ladite ouverture d'entrée de fil (4A), un outil d'introduction de fil en saillie depuis une face de pourtour extérieur d'élément d'avant-manche de canne (4),
ledit outil d'introduction de fil (16) prévoit une face inclinée orientée vers l'extérieur (16B) s'allongeant normale à l'axe dudit élément d'avant-manche de canne (4), et
ladite face inclinée (16B) définit une ouverture d'entrée de fil (16D) qui sert de conduit incliné de guidage (16C) en communication avec l'ouverture d'entrée de fil (4A).

12. Canne à pêche à fil intérieur tel que revendiqué à l'une ou l'autre des revendications 8 à 11,
**caractérisé en ce que,**
un élément télescopique de canne (3) logé protractile et rétractile dans ledit élément d'avant-manche de canne (4), un état protractile dudit élément télescopique de canne (3) étant maintenu par la prise entre une extrémité arrière dudit élément télescopique de canne (3) et une face intérieure d'extrémité d'attaque dudit élément d'avant-manche de canne (4);
une ouverture intérieure (3B) définie à l'extrémité arrière dudit élément télescopique de canne (3) pour admettre l'introduction du fil de pêche a) dans ledit élément télescopique de canne (3);
ledit moyen de maintien de position est adapté pour assurer sélectivement;
l'état protractile selon lequel l'élément d'avant-manche de canne (4) est avancé depuis ledit élément de manche de canne (5) de façon telle à amener ladite ouverture d'entrée de fil (4A) à distance en avant par rapport à l'extrémité avant dudit élément de manche de canne (5),
un premier état rétracté réalisé à partir d'une opération de première phase de rétraction depuis ledit état protractile selon lequel l'élément d'avant-manche de canne (4) est rétracté dans l'élément de manche de canne(5) de telle façon à fixer en position ladite ouverture d'entrée de fil (4A) en avant de l'extrémité avant dudit élément de manche de canne (5) et en sa proximité, et
un deuxième état rétracté réalisé à partir d'une opération de deuxième phase rétractile selon laquelle ledit élément d'avant-manche de canne (4) est rétracté plus loin dans ledit élément de manche de canne(5) de telle façon à amener ladite ouverture d'entrée de fil (4A) à l'intérieur dudit élément de manche de canne (5); et
une portion de maintien de position (8) pour amener ladite ouverture intérieure (3B) dudit élément'télescopique de canne (3) en une position adjacente à ladite ouverture d'entrée de fil (4A) par la première phase d'opération de rétraction.

13. Canne à pêche à fil intérieur tel que revendiqué à l'une ou l'autre des revendications 1 à 12,
**caractérisé en ce que,**
un anneau de guidage (10) formé à partir de matière dure est installé aux bords d'ouverture de ladite ouverture d'entrée de fil (4A, 4G) et une portion ouverture d'entrée de fil (4A, 4G) sur laquelle est installée ledit anneau de guidage (10) est formée à partir de matière plus souple que la matière formant la portion résiduelle d'élément d'avant-manche de canne (4).

14. Canne à pêche à fil intérieur tel que revendiqué à l'une ou l'autre des revendications 1 à 13,
**caractérisé en ce que,**
un élément de garniture cylindrique (4D) formé à partir de matièere plus souple que la matière formant l'élément d'avant-manche de canne (4) est attaché solidement à une face extérieure de pourtour d'élément d'avant-manche de canne (4), et un anneau de guidage (10) formé à partir de matière plus dure que la matière formant l'élément d'avant-manche de canne (4) est installé sur un bord d'ouverture de l'ouverture d'entrée de fil (4G) communiquant avec ladite ouverture d'entrée de fil (4A).

15. Canne à pêche à fil intérieur tel que revendiqué à la revendication 14,
**caractérisé en ce que,**
ledit élément d'avant-manche de canne (4) est logé protractile et rétractile dans un élément de manche de canne (5) y compris un porte-moulinet (15), et un moyen de maintien de position est prévu pour assurer sélectivement l'état protractile à partir duquel l'élément d'avant-manche de canne (4) est retiré de l'élément de manche de canne (5) de telle façon à amener l'ouverture d'entrée de fil (4G) à distance en avant de l'extrémité avant de l'élément de manche de canne(5), et l'état rétractile à partir duquel l'élément d'avant-manche de canne (4) est rétracté depuis l'état avancé de telle façon à amener l'ouverture d'entrée de fil (4G) en avant de l'extrémité de l'élément avant-manche de canne (5) et en sa proximité; et
dans ledit état rétracté, l'extrémité avant dudit élément de manche de canne (5) vient en prise avec ledit élément de garniture cylindrique (4D).
